# EUROPÄISCHE PATENTSCHRIFT

(11) **EP 3 116 826 B1**
(45) Veröffentlichungstag und Bekanntmachung des Hinweises auf die Patenterteilung: **04.07.2018**
(21) Anmeldenummer: 15708833.7
(22) Anmeldetag: 11.03.2015
(51) Int. Cl.: C01B 3/40, B01J 23/00, B01J 21/02

(54) **YTTRIUMHALTIGER KATALYSATOR ZUR HOCHTEMPERATUR KOHLENDIOXIDHYDRIERUNG, UND/ODER REFORMIERUNG SOWIE EIN VERFAHREN ZUR HOCHTEMPERATUR KOHLENDIOXIDHYDRIERUNG UND/ODER REFORMIERUNG**
YTTRIUM CONTAINING CATALYST FOR HIGH-TEMPERATURE CARBONDIOXIDE HYDROGENATION, AND/OR REFORMING AND PROCESS FOR HIGH-TEMPERATURE CARBONDIOXIDE HYDROGENATION AND/OR REFORMING
CATALYSEZR CONTENANT DE L'YTTRIUM POUR LA HYDROGENATION DE DIOXID DE CARBONE, HYDROGENATION DE DIOXID DE CARBONE A HAUTE TEMPERATURE ET/OU REFORMAGE ET PROCEDE POUR LA HYDROGENATION DE DIOXID DE CARBONE ET/OU REFORMAGE

(30) Priorität: 14.03.2014 EP 14159991; 16.12.2014 EP 14198192
(43) Veröffentlichungstag der Anmeldung: 18.01.2017
(73) Patentinhaber: BASF SE, 67056 Ludwigshafen am Rhein (DE)
(72) Erfinder: SCHUNK, Stephan A., 69126 Heidelberg-Rohrbach (DE); SCHWAB, Ekkehard, 67434 Neustadt (DE); MILANOV, Andrian, 68199 Mannheim (DE); WASSERSCHAFF, Guido, 69151 Neckargemünd (DE); ROUSSIERE, Thomas, 67346 Speyer (DE); STRASSER, Andreas, 69239 Neckarsteinach (DE); LIZANDARA, Carlos, 69123 Heidelberg (DE); MÜLLER, Robert, 69226 Nussloch (DE)
(74) Vertreter: BASF IP Association
(86) Internationale Anmeldenummer: PCT/EP2015/055022
(87) Internationale Veröffentlichungsnummer: WO 2015/135968

(56) Entgegenhaltungen:
- WO-A1-00/16899
- WO-A1-01/28678
- WO-A1-02/066403
- WO-A1-02/098557
- WO-A2-01/36323

## Beschreibung

Die Erfindung betrifft einen Katalysatorvorläufer, der dadurch gekennzeichnet ist, dass dieser zumindest ein kristallines Material umfasst, das Yttrium und Aluminium enthält, kennzeichnend für das kristalline Material ist, dass es eine kubische Garnetstruktur aufweist, wobei der Katalysatorvorläufer Cu, Zn, Fe, Co und/oder Ni enthält und wobei ein Teil der Yttrium- und/oder Aluminiumspezies im kristallinen Material durch zumindest eine Spezies aus der Gruppe Cu, Zn, Ni, Co, Fe substituiert sind, wobei der Anteil an Nebenphasen im Bereich von 0 - 49 Gew.-% liegt. Ferner betrifft die Erfindung ein Verfahren zur Herstellung eines Katalysatorvorläufers für die Hochtemperatur-Verfahren (i) Kohlendioxidhydrierung, (ii) kombinierten Hochtemperatur Kohlendioxidhydrierung und Reformierung und/oder (iii) Reformierung von kohlenwasserstoffhaltigen Verbindungen und/oder Kohlenstoffdioxid und die Verwendung des erfindungsgemäßen Katalysatorvorläufers in Verbindung mit der Reformierung und/oder Hydrierung von Kohlenwasserstoffen, vorzugsweise CH₄, in Gegenwart von CO₂. Zur Herstellung des Katalysatorvorläufers wird eine Aluminiumquelle, die vorzugsweise eine wasserlösliche Vorläuferquelle umfasst, mit einer yttriumhaltigen Metallsalzlösung in Kontakt gebracht, getrocknet und kalziniert. Die Metallsalzlösung weist neben den Yttriumspezies zumindest ein Element aus der Gruppe Co, Cu, Ni, Fe, Zn auf.

Die Reformierung von Methan und Kohlendioxid ist von großem wirtschaftlichem Interesse, da mittels dieses Verfahrens Synthesegas hergestellt werden kann. Das Synthesegas bildet einen Rohstoff für die Herstellung von chemischen Grundstoffen. Darüber hinaus ist die Verwertung von Kohlendioxid als Ausgangsstoff bei chemischen Synthesen von signifikanter Bedeutung, um Kohlendioxid, das in zahlreichen Prozessen als Abfallprodukt anfällt, auf chemischem Weg zu binden und dadurch eine Emission in die Atmosphäre zu vermeiden.

Gemäß ihrer großen wirtschaftlichen Bedeutung bildet die Reformierung von Kohlenwasserstoffen in Gegenwart von Kohlendioxid den Gegenstand von zahlreichen Veröffentlichungen. Im Folgenden wird eine kurze Übersicht zu den inhaltlichen Schwerpunkten einiger ausgewählter Veröffentlichungen aus dem Stand der Technik gegeben.

Im Folgenden wird Stand der Technik zur Reformierung von Kohlenwasserstoffen mit Kohlenstoffdioxid, zur Dampfreformierung und zur Partialoxidation aufgeführt:
In WO 00/16899 wird ein Katalysator zur Reformierung von Kohlenwasserstoffen mit Kohlenstoffdioxid zur Herstellung von Synthesegas offenbart. Es wird ein nickelhaltiger Katalysator auf Basis eines Oxides mit kubischem Strukturtyp als Trägermaterial beschrieben. Beispielhaft wird Y3AI5O12 als Trägermaterial genannt. Die nickelhaltigen Katalysatoren nach WO 00/16899 werden via Imprägnierung des Trägermaterials hergestellt.

Liu und He beschreiben die Nutzung yttriumhaltiger Katalysatoren (International Journal of Hydrogen Energy 36 (2011) Seiten 14447-14454) zur Dampfreformierung von Methan. Die Herstellung dieser Katalysatoren erfolgte durch Gelierung von Y- und Ni-haltigen wässrigen Lösungen. Eine Verwendung von Al wird nicht offenbart. Die hierbei erhaltenen nickel- und yttriumoxidhaltigen Materialien wurden zur Austestung in der Dampfreformierung von Methan eingesetzt, wobei die Testung unter Normaldruck ablief.

In der WO 2001/36323 beschreiben die Erfinder die Nutzung von kobalthaltigen KataIysatorsystemen zur katalytischen Partialoxidation von Methan zur Herstellung von Synthesegas. Es wird offenbart, dass Kobaltmetall oder eine kobalthaltige Komponente gemeinsam mit einem Trägervorliegen kann, wobei das Kobalt nicht strukturell in den Träger eingebaut ist. In einer Liste, die eine Vielzahl von Trägermaterialien aufführt, wird auch Yttriumaluminiumgarnet genannt. Die Erfinder schließen insbesondere in ihre Erfindung mit ein, dass bei der Partialoxidation von Methan mit Sauerstoff auch Reaktionen wie die trockene Reformierung von Methan mit Kohlendioxid stattfinden kann.

Le Valant et al. offenbaren in einer Veröffentlichung im Jahr 2010 (Applied Catalysis B: Environmental 97 (2010) p. 72-81) die Nutzung von Rhodiumkatalysatoren, die Yttrium und Nickel sowie Aluminium enthalten in der Nutzung der Ethanoldampfreformierung bei Atmosphärendruck. Die offenbarten Träger weisen keine Garnetstruktur auf. Ergebnis ihrer Untersuchungen ist, dass sich die Promotierung von Rhodium mit Nickel auf die Gesamtperformance des Materials positiv auf die katalytische Performance auswirkt.

In einer Veröffentlichung von Shi et al. im Jahr 2012 (in Applied Catalysis B: Environmental 115- 116 (2012) 190- 200) wird über die Wirkung verschiedener Promotoren auf Alumina-geträgerte Palladiumkatalysatoren berichtet, unter anderem auch über Yttrium in der trockenen Reformierung. Die von Shi et al. beschriebenen Katalysatoren weisen gamma-Alumina-Struktur auf mit geträgerten Pd-Nanopartikeln auf der Oberfläche. Die Ausbildung eines yttrium- und aluminiumhaltigen Mischoxides wird nicht berichtet. Die Ergebnisse deuten an, dass das Yttrium einen positiven Effekt in Bezug auf Zielperformance haben könnte, da die yttriumhaltigen Katalysatoren verbesserter Verkokungsresistenz aufweisen.

Im Folgenden wird Stand der Technik zur Herstellung von Garnet aufgeführt:
Lu et al. (J. Am. Ceram. Soc., 85 [2] 490-92 (2002)) beschreiben ein Verfahren zur Herstellung von polykristallinen Garnets, wobei diese durch Vermischung der jeweiligen Metallnitrate mit organischen Säuren, deren innige Vermischung, Abformung und thermische Behandlung erhalten werden. Über eine Nutzung der Materialien in der Katalyse wird nicht berichtet.

Innoue berichtet (J. Phys.: Condens. Matter 16 (2004) S1291-S1303) über eine Synthese von garnethaltigen Oxiden, bei der von glycolhaltigen Vorläuferlösungen ausgegangen wird. Über die Verwendung solcher Verbindungen in der Katalyse wird nicht berichtet.

Sun et al. berichten über ein alternatives Sol-Gel-Verfahren zur Herstellung von Garnets (Journal of Alloys and Compounds 379 (2004) L1-L3). Dabei wird eine synthetische Methode benutzt, die von Aluminiumalkoholaten und Yttrium-Nitrat ausgeht, die einer thermischen Behandlung unterzogen werden. Der Publikation sind keine Hinweise in Bezug auf die Nutzung dieser Materialien im Bereich der Katalyse zu entnehmen.

Im Folgenden wird der Vollständigkeit halber auch eine kurze Darstellung zum Standes der Technik von nickelhaltige Hexaaluminate gegeben, auch wenn diese keine strukturelle Verwandtschaft zu Ni-, Co-, Cu-, Zn- und Fe-haltigen Garnets aufweisen. Bei diesen hexaaluminathaltigen Materialien, die Ni, Co, Fe, Cu, Zn und Seltene Erden enthalten, handelt es sich um komplexe kristalline Oxide, die für in Reformierung von Methan zum Stand der Technik gehören:
Über die katalytischen Eigenschaften von nickelmodifizierten Hexaaluminaten zur Reformierung von Methan und Kohlendioxid zu Synthesegas wird beispielsweise in einer Publikation von Zhalin Xu et al. berichtet (Zhalin Xu, Ming Zhen, Yingli Bi Kaiji Zhen, Applied Catalysis A: General 198 (2000) S. 267 - 273). Ein Befund ist, dass die nickelmodifizierten Hexaaluminate eine größere Aktivität und eine bessere Stabilität aufweisen als die herkömmlichen nickelhaltigen Katalysatoren, bei denen das Nickel auf den Trägermaterialien abgeschieden wurde.

In einer Publikation von Yokata et al. wird über die Verwendung von hexaaluminathaltigen Katalysatoren für die Synthesegasproduktion aus der Reformierung von Methan in Gegenwart von CO₂ und Dampf berichtet (O. Yokata, T. Tanaka, Z. Hou, T. Yashima; Stud. Surf. Sci. and Cat. 153 (2004) p. 141 - 144. Die Untersuchung bezieht sich auf nickel- und manganhaltige Hexaaluminate, wobei die manganhaltigen Hexaaluminate Elemente aus der Gruppe Ba, La und Sr sowie ein Gemisch aus Sr_{0,8} La_{0,2} aufweisen können. Die katalytische Charakterisierung der Katalysatoren erfolgt in der Gegenwart von CH₄/H₂O/CO₂ (im Volumenverhältnis von 150/100/50) unter atmosphärischem Druck bei einer Temperatur von 700 °C. Die Strömungsgeschwindigkeit beträgt 18.000 hr⁻¹.

J. Wang et al. berichten über die Reformierung von Methan zu Synthesegas unter der Verwendung von Katalysatoren aus nickelhaltigen Magnetoplumbiten, die mit Kobalt dotiert sind, beziehungsweise bei denen das Nickel vollständig durch Kobalt ersetzt wurde (J. Wang, Y. Liu, TX. Cheng, WX. Li, YL. Bi, KJ. Zhen, Appl. Catalysis A: General 250 (2003) p. 13 - 23). Die von Wang et al. offenbarten Katalysatoren werden durch die Summenformel LaNiₓCo₁₋ₓAl₁₁O₁₉ beschreiben, wobei auch eine kobalt-lanthanhaltiges Hexaaluminat mit x=0 offenbart wird, welches frei von Nickel ist. Die Herstellung der von Wang et al. offenbarten Katalysatoren basiert auf der Verwendung von Aluminiumnitratsalz, das gemeinsam mit den übrigen Metallnitratsalzen (d.h. La, Ni und Co beziehungsweise La und Co) in Gegenwart von PEG-Isopropylalkohol zersetzt wird. Die katalytischen Reformierungsuntersuchungen werden bei Temperaturen bis 800 °C und einer GHSV von 9.600 hr⁻¹ durchgeführt. Der nickelfreie Hexaaluminatkatalysator mit der Zusammensetzung LaCoAl₁₁O₁₉ zeigt nur eine sehr geringe Aktivität hinsichtlich der untersuchten Konversion von Methan und CO₂. Generell lassen die Ergebnisse von Wang et al. erkennen, dass die katalytische Effizienz der Katalysatoren durch die Beimengung von Kobalt nachteilhaft beeinflusst wird.

In der US 7,442,669 B2 offenbaren D. Wickham et al. einen Oxidationskatalysator, der metallgetauschte Hexaaluminate umfasst. Der Katalysator weist eine gute katalytische Aktivität und Stabilität bei hohen Temperaturen auf, wobei die Aktivität auch über einen längeren Zeitraum erhalten wird. Im Allgemeinen weisen die Katalysatoren eine Eignung als Oxidationskatalysatoren auf. Insbesondere eignen sich die Katalysatoren zur Behandlung von Gasen aus der Methanverbrennung, wobei insbesondere die Verwendung in Turbinen von Bedeutung ist, die mit Erdgas betrieben werden. Die Synthese der hexaaluminathaltigen Katalysatoren basiert auf der Verwendung von Böhmitpartikeln.

Die in der US 7,442,669 B2 offenbarten Hexaaluminate enthalten bis zu drei unterschiedliche Metallspezies aus den Gruppen M₁, M₂ und M₃. Die Gruppe M₁ umfasst Elemente aus der Gruppe der Seltenen Erden, die Gruppe M₂ umfasst Elemente aus der Gruppe der Erdalkalielemente und die Gruppe M₃ umfasst Elemente aus der Gruppe der Übergansmetalle, wobei Mn, Fe, Co, Ni, Cu, Ag, Au, Rh, Ru, Pd, Ir und Pt genannt werden. Zur Charakterisierung der Katalysatoren wurden diese im Hinblick auf die Methanzersetzungsaktivität getestet, wobei die Katalysatoren einem Gasstrom mit 3 Vol.-% Methan ausgesetzt wurden. Die Untersuchungen wurden bei einem Druck von 5 bar und einer GHSV von 17.000 hr⁻¹ durchgeführt. Als Maß für die Effizienz der Katalysatoren wurde die Temperatur T_{1/2} ermittelt, die erforderlich ist, um fünfzig Prozent des Methans umzusetzen. Die getesteten Katalysatoren wurden vor den katalytischen Untersuchungen unterschiedlichen Alterungsprotokollen unterzogen.

Die EP 2 119 671 offenbart die Synthese von hexaaluminathaltigen Katalysatoren in Gegenwart von Templatmaterialien. Die Templatmaterialien sind von Vorteil. Sie beeinflussen die Ausbildung von bestimmten Porenstrukturen. Bei den mittels des erfindungsgemäßen Verfahrens hergestellten Hexaaluminaten kann die Porenstruktur somit kontrolliert werden.

Eine große Anzahl der Publikationen bezieht sich auf die Verwendung von hexaaluminathaltigen Katalysatoren zur Oxidation beziehungsweise zur Partialoxidation von Kohlenwasserstoffen in Gegenwart von Sauerstoff. Bei der Durchführung der Partialoxidationen sind sehr kurze Kontaktzeiten erwünscht, um eine vollständige Oxidation der Kohlenwasserstoffe zu verhindern. Dazu ist es notwendig, die Reaktionen bei hohen Strömungsgeschwindigkeiten, einer niedrigen Kohlenwasserstoffkonzentration und in Gegenwart von Sauerstoff vorzunehmen. Als beispielhafte Offenbarungen auf dem Gebiet der Partialoxidation sind die Folgenden Offenbarungen zu nennen: Kikuchi et al. (R. Kikuchi, Y. Iwasa, T. Takeguchi, K. Eguchi; Applied Catalyis A: General 281 (2005) p. 61 - 67), G. Groppi (Applied Catalysis A: General 104 (1993) p. 101 - 108.

Generell sind im Stand der Technik unterschiedliche Verfahren zur Herstellung von hexaaluminathaltigen Katalysatoren veröffentlicht worden, die jedoch alle dadurch gekennzeichnet sind, dass die entsprechenden Ausgangskomponenten einer thermischen Behandlung bei Temperaturen von 1200 °C und darüber unterzogen werden.

Beispielsweise beschreiben S. Nugroho et al. die Herstellung von phasenreinem Bariumhexaaluminat, das durch Tempern von Bariumoxid und Aluminiumoxid (d.h. BaO und Al₂O₃) mittels Festkörperreaktion (einer sogenannten Solid State Reaction) bei Temperaturen von 1450 °C erhalten wurde (siehe S. Nugroho et al., Journal of Alloys and Compounds, 2010, 502, S. 466-471).

M. Machida et al. (M. Machida et al, Journal of Catalysis, 1987, 103, S. 385 - 393) offenbaren die Herstellung von phasenreinen Bariumhexaaluminaten, die durch die Hydrolyse der entsprechenden Alkoxide erhalten werden, wobei diese bei Temperaturen bis 1300 °C behandelt werden. Die daraus resultierenden Hexaaluminatphasen verfügen über Oberflächen von 11 m²/g.

Chu et al. beschreiben eine Herstellung von Bariumhexaaluminaten durch Carbonatfällung (siehe W. Chu et al., Catalysis Letters, 2001, 74, S. 139-144). Bei der thermischen Behandlung waren Temperaturen von 1200 °C erforderlich, um die Materialien mit einer hohen Phasenreinheit in Bezug auf die Bariumhexaaluminatphase zu erhalten. Es wird berichtet, dass die Materialien Oberflächen von 17 m²/g aufweisen.

Davon abgesehen gibt es im Stand der Technik auch eine Offenbarung von F. Yin et al. zur Herstellung von Hexaaluminaten mittels der Verbrennung von Harnstoff (d.h. dem sogenannten Urea-Combustion-Verfahren), die von anderen Offenbarungen dahingehend abweicht, dass die thermische Behandlung der Ausgangsstoffe bei einer viel geringeren Temperatur erfolgt als bei den sonst bekannten Verfahren. F. Yin et al. geben an, dass das phasenreine Hexaaluminat-Material bereits bei 500 °C erhalten wurde. Das dabei erhaltene Material wies eine Oberfläche von 20 m²/g auf.

Die US 2007/0111884 A1 (Laiyuan Chen et al. und Delphi als Anmelder) offenbart und beansprucht Katalysatorträgermaterialien, die Hexaaluminate und Alumina umfassen und die mit Rhodium als Aktivkomponente versehen sind. Zur Herstellung des Katalysatormaterials werden die Ausgangsmaterialien mit einem stöchiometrischen Überschuss an aluminiumhaltiger Komponente in Verbindung gebracht, so dass bei der Synthese neben der hexaaluminathaltigen Phase auch Alumina als Nebenphase gebildet wird. Es werden in der US 2007/0111884 A1 Hexaaluminate offenbart, die unterschiedliche Kationen enthalten können, wobei auch lanthanhaltige Hexaamluminate genannt werden, die unterschiedliche zweiwertige Kationen wie Mg, Ca, Ni, Co, Zn und Fe enthalten können. Zur Herstellung der Katalysatorträgermaterialien und Katalysatoren werden unterschiedliche Prozesse offenbart, die sich jeweils im Hinblick auf die verwendeten Mischschritte und die thermischen Behandlungsschritte voneinander unterscheiden. Die erfindungsgemäßen Katalysatoren, die gemäß Offenbarung allesamt mit Rhodium als Aktivmetall dotiert sind, werden in einem Verfahren zur Partialoxidation von Benzin in Gegenwart von Sauerstoff eingesetzt, das zur Herstellung eines wasserstoffreichen Gasgemisches dient. Bei den Partialoxidationsreaktionen, die zur Reformierung von Treibstoffen verwendet werden, können Temperaturen im Bereich von 1000 °C und höher auftreten und es ist aufgrund der hohen Temperaturen notwendig, hierfür besonders sinterbeständige Katalysatoren zu entwickeln.

In seiner Doktorarbeit behandelt Todd H. Gardner im Jahr 2007 die Verwendung von Hexaaluminaten als Katalysatoren für die Partialoxidation von Treibstoffen, die bei der Destillation in der mittleren Fraktion erhalten werden. Es werden insbesondere auch lanthanhaltige, bariumhaltige und strontiumhaltige Hexaaluminate beschrieben, die unterschiedliche Übergangsmetallkationen enthalten können. Den Schwerpunkt der Arbeit bildet die Untersuchung von Hexaaluminaten, die Nickel, Kobalt oder Eisen enthalten, wobei die Übergangsmetalle in unterschiedlichen Mengenverhältnissen vorliegen und mit den Kationen aus der Gruppe Sr, La oder Ba kombiniert werden, die ebenfalls in unterschiedlichen Mengenverhältnissen vorliegen. Die Arbeit ist gezielt auf eine Untersuchung von reinphasigen Hexaaluminaten gerichtet. Gardner berichtet, dass Phasenverunreinigungen zwar nicht ausgeschlossen sind, jedoch nur in sehr geringen Konzentrationen vorgelegen hätten. Zur Charakterisierung der katalytischen Eigenschaften wurden die Katalysatoren zur Partialoxidation von n-Tetradecan eingesetzt. Die Partialoxidationen wurden bei einem Druck von etwa 2 bar, einer GHSV von 50.000 h⁻¹ und unter Verwendung eines Sauerstoff-zu-Kohlenstoff-Verhältnisses (d.h. O zu C) von 1,2, durchgeführt.

In einer Publikation von J. Kirchnerova et al. (in Catalysis Letters 67 (2000) p. 175 - 181) werden die Kriterien für das Design von neuen Hochtemperaturkatalysatoren zur Katalyse von Verbrennungsreaktionen beschreiben. Die Publikation bezieht sich auch auf die Herstellung und Testung von Materialen mit Perovskitstruktur und auf Materialien mit Hexaaluminatstruktur. Hierbei werden Hexaaluminate beschreiben, die Sr, La und Mn enthalten (d.h. die Strukturformel Sr_{0,8}La_{0,2}MnAl₁₁O₁₉). Zu erwähnen ist auch, dass die Verwendung von Böhmiten als Ausgangssubstanz bei der Synthese der Materialien offenbart wird. Eine Schlussfolgerung, die von Kircherova et al. gezogen wird, ist, dass diejenigen Perovskite, die bestimmte Übergangsmetalle aufweisen, Aktivität bei der katalytischen Verbrennung aufweisen können. Die katalytischen Experimente zur Charakterisierung der Katalysatoren beziehen sich auf die Oxidation von Methan zu Kohlendioxid in Gegenwart von Luft, wobei der Methangehalt mit 2 % angegeben wird.

Die CN 101306361 A offenbart Hexaaluminate, die als Katalysatoren für die Durchführung von Reaktionen zur Oxidation von Kohlenwasserstoffen eingesetzt werden. Als stabilisierende Elemente weisen die Hexaaluminate die kationischen Spezies La, Ba oder Ca auf und als Übergangsmetallkationen können die Hexaaluminate Cr, Mn, Fe, Co, Ni oder Cu aufweisen.

Im Folgenden werden einige Schriften aufgeführt, die einen Stand der Technik zur Reverse Water Gas Shift Reaktion (RWGS) wiedergeben:
US 20070149392 offenbart den Einsatz eines Mehrkomponenten Katalysators für eine RWGS Reaktion. Als Aktivmetalle werden Blei-, Kupfer- und/oder Zinkoxid auf Trägermaterialien beschrieben, ferner Platin auf Cerdioxid und geträgertes Gold. Die Reaktionstemperatur der RWGS liegt bei 400°C.

WO 2001/ 17674 beschreibt den Einsatz von geträgerten Kupfer/Zink Katalysatoren für die RWGS Reaktion. Die Einsatztemperatur dieser Katalysatoren liegt im Bereich von 150-300°C.

In EP 725 038 wird der Einsatz von Multikomponentenkatalysatoren beschreiben, die Metalle der Gruppe VIII und VIa geträgert auf Zinkoxid in Kombination mit einem Metall der Gruppe IIIb und IVa enthalten. Der Einsatz solcher Aktivmassen bis zu Temperaturen bis 600°C zur Umsetzungung von Eduktgasen der Zusammensetzung Wasserstoff zu Kohlendioxid von 1 wird beschrieben.

In EP 601 956 wird der Einsatz von kommerziell erhältlichen Reformierungskatalysatoren mit den Aktivmetallen Nickel, Eisen, Kupfer und Zink beschrieben. Die Materialien werden als vorteilhaft für den Einsatz bei Temperaturen von 400 bis 800°C und Eduktgasen der Zusammensetzung Wasserstoff zu Kohlendioxid von 1,5 bis 6,5 beschrieben.

In EP 291 857 wird der Einsatz eines Nickel-basierten Katalysators für die RWGS beschrieben. Der Katalysator besteht aus einem Aluminiumoxid-haltigen Trägermaterial. Der Einsatz des Katalysators wird als vorteilhaft für die kombinierte Reformierung und RWGS-Reaktion beschrieben.

In keinem Stand der Technik zur RWGS-Reaktion werden Garnets als Trägermaterialien genannt.

Im Stand der Technik werden demnach als Katalysatoren in Reformierungsreaktionen sogenannte geträgerte Katalysatoren eingesetzt. Dabei wird in der Regel im Stand der Technik ein Trägermaterial durch ein geeignetes Tränkverfahren mit einer Vorläuferlösung getränkt und durch nachfolgende thermische und physikochemische Behandlungsschritte in den aktiven Katalysator überführt (Alvin B. Stiles, Catalyst Manufacture, CRC Press 1995). Durch die Trägerung soll ein intimer Kontakt des Aktivmetalles mit der Trägeroberfläche hergestellt werden, und durch geeignete Behandlung eine hohe Dispersion des Aktivmetalles erzeugt werden. Diese Vorgehensweise ist oft mit Nachteilen behaftet, da die entstehenden kleinen Metallpartikel oft eine hohe Tendenz haben zu sintern und der durch die Trägerung erzeugte Kontakt von Oxid und Metallnanopartikel oft nicht zu der gewünschten Intimität führt. Eine Möglichkeit, um nachteilige Effekte auf die Aktivität und Stabilität hier zu vermeiden, ist eine Erhöhung des Aktivmetallgehaltes, wobei bei solchen Ansätzen die Dispersion des Aktivmetalles in der Regel jedoch sehr stark leidet (Wanke S. E. and Flynn, P.C. (1975) "The sintering of Supported Metal Catalysts" Catal. Rev. Sci. Eng. Vol. 12(1), 93-135.; Charles T. Campbell Acc. Chem. Res., 2013, 46 (8), pp 1712-1719 DOI: 10.1021/ar3003514).
Eine der Aufgaben, die der Erfindung zugrunde liegt, besteht in der Bereitstellung eines verbesserten Katalysators, insbesondere sollte der Katalysator eine verbesserte Aktivität und/oder eine verbesserte Resistenz gegen Koksaufbau aufweisen, sowie dessen Einsatz in einem verbesserten Verfahren, insbesondere bei Temperaturen von 600°C bis 1400°C und Lasten von 5000 bis 100000 h-1, zur Hochtemperatur Kohlendioxidhydrierung, und/oder Reformierung. Das Herstellungsverfahren dieser Katalysatoren soll möglichst energieeffizient und ressourcenschonend sein. Weiterhin soll das Verfahren zur Hochtemperatur Kohlendioxidhydrierung, und/oder Reformierung auch zur Synthesegasherstellung geeignet sein. Eine weitere Aufgabe ist es auch, dass sich das erfindungsgemäße Verfahren zur Hochtemperatur Kohlendioxidhydrierung, und/oder zur Reformierung, insbesondere für die kombinierten Hochtemperatur Kohlendioxidhydrierung und Reformierung von Kohlenwasserstoffen, in der Gegenwart von Methan eignet.
Eine weitere Aufgabe im Rahmen der Erfindung besteht darin besonders aktive Katalysatoren zu identifizieren, die auch bei hohen Lasten, insbesondere bei größer als 10.000 h-1, noch in der Lage sind, eine Eduktgasmischung in eine Zusammensetzung umzusetzen, die nahe am thermodynamisch vorhergesagten Gleichgewicht liegt. Besonders aktive Katalysatoren erlauben es, den Reaktor kleiner zu dimensionieren und damit den Invest für diesen Anlagenteil klein zu halten.
Die hier genenannten und weitere Aufgaben werden dadurch gelöst, dass ein Katalysatorvorläufer, vorteilhaft zur Hochtemperatur Kohlendioxidhydrierung, und/oder zur Reformierung, bereitgestellt wird, der dadurch gekennzeichnet ist, dass dieser zumindest ein kristallines Material umfasst, das Yttrium und Aluminium enthält, kennzeichnend für das kristalline Material ist, dass es eine kubische Garnetstruktur aufweist, wobei der Katalysatorvorläufer Cu, Fe, Co, Zn und/oder Ni, insbesondere Cu, Fe, Co und/oder Ni, enthält und wobei ein Teil der Yttrium- und/oder Aluminiumspezies im kristallinen Material durch zumindest eine Spezies aus der Gruppe Cu, Zn, Ni, Co, Fe substituiert sind, wobei der Anteil an Nebenphasen im Bereich von 0 - 49 Gew.-% liegt. Unter "Hochtemperaturverfahren" werden Verfahren bei Temperaturen von > 600°C verstanden, insbesondere > 600°C und < 1400°C.

Im Fall eines Katalysatorvorläufers liegen die Metall-Spezies Cu, Fe, Co, Zn und/oder Ni, bevorzugt innerhalb des kristallinen Materials als Substituenten von Y und/oder Al vor.
Im Fall eines Katalysators können die die Metall-Spezies Cu, Fe, Co, Zn und/oder Ni entweder (i) innerhalb des kristallinen Materials als Substituenten von Y und/oder Al vorliegen oder (ii) auf der Oberfläche des Katalysators vorliegen, bevorzugt in nullwertiger Form. Im Fall der Variante (ii) sind Cu, Fe, Zn und/oder Ni bevorzugt. Falls die Metall-Spezies Cu, Fe, Co, Zn und/oder Ni, bevorzugt Cu, Fe, Zn und/oder Ni, an der Oberfläche des Katalysators vorliegen, liegen diese bevorzugt als röntgen-amorphe Nanopartikel vor.
Der Katalysator wird vorzugsweise zur kombinierten Hochtemperatur Kohlendioxidhydrierung und Reformierung von Kohlenwasserstoffen in der Gegenwart von Methan eingesetzt.
Die nachfolgend angegebenen Gew.-% und mol.-% beziehen sich jeweils auf den gesamten Katalysator bzw. Katalysatorvorläufer; wobei der Bilanzraum über die Metalle geschlossen wird. In einer bevorzugten Ausführungsform ist der Katalysator dadurch gekennzeichnet, dass dieser einen Y-Gehalt im Bereich von 15 - 80 mol-%, vorzugsweise 17 - 70 mol-%, weiter vorzugsweise im Bereich von 20 - 70 mol-% aufweist.
In einer bevorzugten Ausführungsform ist der Katalysator dadurch gekennzeichnet, dass dieser einen Al-Gehalt in einem Bereich von 10 - 90 mol-%, vorzugsweise 20 - 85 mol-% und weiter bevorzugt im Bereich von 30 - 80 mol-% aufweist.
In einer bevorzugten Ausführungsform ist der Katalysator dadurch gekennzeichnet, dass der Gehalt an dem zumindest einem weiteren Element aus der Gruppe Zn, Cu, Ni, Co, Fe, bzw. die Summe aus mehreren dieser Elemente, in einem Bereich von 0,01 - 10 mol-%, vorzugsweise 0,02 -7 mol-%, weiter bevorzugt 0,1 - 5 mol-% liegt.
Vorzugsweise ist die Summe aus Y und Al größer als 80 mol-%, weiter vorzugsweise größer als 90 mol-% und insbesondere größer als 95 mol-%; bevorzugt ist die Summe aus Y und Al in einem Bereich von 80 bis 99,99 mol-%.
Der Katalysator beziehungsweise erfindungsgemäße Katalysatorvorläufer zur Hochtemperatur Kohlendioxidhydrierung, und/oder Reformierung umfasst zumindest ein kristallines Material, das zumindest Yttrium-, Aluminium- und Sauerstoffspezies enthält und das zumindest eine Komponente mit kubische Garnetstruktur, orthorhombische Perovskitstruktur, hexagonale Perovskitstruktur und/oder monokline Perovskitstruktur umfasst, wobei zumindest ein Teil der Yttrium- und/oder Aluminiumspezies innerhalb des kristallinen Materials durch zumindest eine Spezies aus der Gruppe Cu, Ni, Co, Fe, Zn substituiert sind. Die Substitution kann sowohl durch eines der Spezies aus der Gruppe Cu, Ni, Co, Fe, Zn erfolgen, als auch durch zwei, drei, vier oder fünf der besagten Spezies dieser Gruppe. Bevorzugte Kombinationen sind Cu mit Zn, Ni mit Zn, Co mit Zn, Co mit Ni, Cu mit Ni und/oder Cu mit Co.

Die Hauptphasen aus (i) Y₃Al₅O₁₂ (YAG) mit kubischer Yttrium-Aluminum-Garnet-Struktur, (ii) YAlO₃ (YAP) mit orthorhombischer und/oder hexagonaler Yttrium-Aluminum-Perovskit-Struktur und/oder (iii) Y₄Al₂O₉ (YAM) mit monokliner Perovskit-Struktur des Katalysators weisen vorteilhaft ein Gewicht von größer als 51 Gew.-%, bevorzugt größer als 70 Gew.-%, insbesondere größer als 80 Gew.-%, ganz besonders bevorzugt größer als 90 Gew.-%, weiter bevorzugt größer als 95 Gew.-%, weiter bevorzugt größer als 97 Gew.-%.

Der Katalysator beziehungsweise erfindungsgemäße Katalysatorvorläufer kann zusätzlich zu den Hauptphasen aus (i) Y₃Al₅O₁₂ (YAG) mit kubischer Yttrium-Aluminum-Garnet-Struktur, (ii) YAlO₃ (YAP) mit orthorhombischer und/oder hexagonaler Yttrium-Aluminum-Perovskit-Struktur und/oder (iii) Y₄Al₂O₉ (YAM) mit monokliner Perovskit-Struktur, die bevorzugt in einem Bereich von 51 bis 100 Gew.-%, insbesondere 60 bis 99 Gew.-%, ganz besonders bevorzugt 70 bis 97 Gew.-% vorliegen, zumindest auch eine Nebenphase enthalten, wobei der Anteil an der zumindest einen Nebenphase im Bereich 0 - 49 Gew.-% (im Bezug auf den strukturanalytisch erfassbaren Bilanzraum) liegt, vorzugweise im Bereich von 1 - 40 Gew.-%, weiter vorzugsweise im Bereich von 3 - 30 Gew.-%.

Bei der zumindest einen Nebenphase kann es sich beispielsweise um Oxide handeln, die Cu, Zn, Ni, Co und/oder Fe und/oder Oxide von Yttrium enthalten. Beispielsweise sind die Nebenphasen ausgewählt aus der Gruppe alpha-Aluminiumoxid, theta-Aluminiumoxid, YCuO₃, YCoO₃, YNiO₃, kobalt-, eisen-, kupfer-, zink-, nickel- und yttriumhaltigen Ruddelson-Popper-Phasen, YFeO₃, CuAl₂O₃, CoAl₂O4, NiAl₂O₄, FeAl₂O₄, yttriumstabilisiertes Aluminiumoxid und/oder yttriumstabilisiertes Aluminiumoxidhydroxid, wobei die yttriumhaltigen Nebenphasen bevorzugt sind.

Weiter bevorzugt ist ein Katalysator oder Katalysatorvorläufer, dessen BET-Oberfläche größer ist als 2 m²/g, weiter vorzugsweise größer als 4 m²/g, noch weiter vorzugsweise größer als 8 m²/g und insbesondere vorzugsweise größer als 15 m²/g.

In einer bevorzugten Ausführungsform ist der Katalysator oder erfindungsgemäße Katalysatorvorläufer dadurch gekennzeichnet, dass zumindest Yttriumaluminiumgarnet als Hauptphase enthält.

Ein Vergleich der Zusammensetzung des Katalysators, der Yttriumaluminiumgarnet enthält, mit einem Material, dass vollständig aus Yttrium und Aluminium besteht und eine gut ausgebildete YAG-Struktur Y₃Al₅O₁₂ (YAG) hat, ergibt, dass der Katalysator die katalytisch wirksamen Elemente Cu, Ni, Co, Zn und/oder Fe, bevorzugt in isomorpher Substitution, im YAG Gitter aufweist. Die Substitution des Cu, Ni, Co, Zn und/oder Fe kann dabei sowohl auf Aluminium oder Yttrium-Plätze erfolgen, was zu einem von der idealen Zusammensetzung (Y₃Al₅O₁₂ = Y/Al-Verhältnis von 3/5) abweichenden Garnet führen kann.

Eine Erläuterung zur Bildung des Katalysators ist, dass die dem Synthesesystem zugesetzten zink-, kupfer-, nickel-, eisen- und/oder kobalthaltigen Spezies nahezu vollständig, d.h. bevorzugt größer als 70 Gew.-%, insbesondere größer als 80 Gew.-%, ganz besonders bevorzugt größer als 95 Gew.-%, weiter bevorzugt größer als 97 Gew.-% in die Struktur der Garnet eingebaut werden und für die Bildung der Nebenphasen kaum, bevorzugt kein Zink, Kupfer, Nickel, Eisen und/oder Kobalt mehr zur Verfügung steht. Die Bildung von Nebenphasen wird unterdrückt und es erfolgt die Bildung der erfindungsgemäßen Zielphasen aus den aluminium- und yttriumhaltigen Spezies. Vorzugsweise ist die Bildung von Aluminaten, Spinellen beziehungsweise Perovskiten der Elemente Zn, Cu, Ni, Co und/oder Fe oder andere dem Fachmann bekannte nicht erfindungsgemäße Phasen der Elemente Y, Zn, Cu, Ni, Co, Fe und/oder Al kleiner als 15 Gew.-%, insbesondere kleiner als 10 Gew.-%, ganz besonders bevorzugt kleiner als 5 Gew.-%; im Idealfall wird diese Bildung gänzlich vermieden. Die oben gegebene Erläuterung soll die Erfindung jedoch in keiner Weise einschränken.

In einer bevorzugten Ausführungsform enthält der Katalysator beziehungsweise Katalysatorvorläufer zumindest einen edelmetallhaltigen Promotor aus der Gruppe Pt, Rh, Ru, Pd, Ir, Au, wobei der Anteil an edelmetallhaltigen Promotoren im Bereich von 0,001 - 5 mol-% im Bezug auf den Katalysator, vorzugsweise im Bereich von 0,1 - 3 mol-% liegt.

In einer weiteren Ausführungsform kann der Katalysator beziehungsweise Katalysatorvorläufer auch einen Anteil, bevorzugt kleiner als 15 mol-%, insbesondere kleiner als 10 mol-%, ganz besonders bevorzugt kleiner als 5 mol-%, an weiteren Kationenspezies (nachfolgend Kationenspezies I) umfassen, die vorzugsweise aus der Gruppe der Seltenerden ausgewählt sind, wobei Seltenerden wie Ce, La, Pr, Tb, Nd, Eu besonders bevorzugt sind. In einer bevorzugten Ausführungsform wird zumindest ein weiteres Metallsalz aus der Gruppe der Lanthaniden, bevorzugt Lanthan, Cer und/oder Praseodym, eingesetzt.

In einer weiteren Ausführungsform kann der Katalysator beziehungsweise Katalysatorvorläufer auch einen Anteil, bevorzugt kleiner als 3 mol-%, insbesondere kleiner als 1 mol-%, ganz besonders bevorzugt kleiner als 0,5 mol-%, an weitere Kationenspezies (nachfolgend Kationenspezies II) umfassen, die vorzugsweise aus der Gruppe Mg, Ca, Sr, Ba, Ga, Be, Cr, Mn ausgewählt sind.

Im Rahmen der Offenbarung werden die Begriffe Garnet und Granat als synonyme Bezeichnungen betrachtet.

Der Katalysator beziehungsweise erfindungsgemäße Katalysatorvorläufer ist dadurch gekennzeichnet, dass dieser durch nachfolgend genannte Schritte herstellbar ist:
(i) Bereitstellung einer Aluminiumquelle, vorzugsweise in Lösung, weiter vorzugsweise in wässriger Lösung,
(ii) Inkontaktbringen der Aluminiumquelle, mit einer yttriumhaltigen Verbindung und zumindest einem weiteren Metallsalz der Gruppe Kupfer, Zink, Nickel, Kobalt oder Eisen,
(iii) innige Durchmischung der Aluminiumquelle aus Schritt (i) mit der Substanzen aus Schritt (ii),
(iv) Trocknung des Gemisches,
(v) Tieftemperaturkalzinierung des Gemisches bei einer Temperatur kleiner gleich 550 °C,
(vi) Abformung beziehungsweise Formgebung,
(vii) Hochtemperaturkalzinierung des Gemisches bei einer Temperatur größer gleich 750 °C.

Für den Fall, dass die Metallsalze bei der Durchmischung in Schritt (iii) nicht in Form der gelösten Metallsalze sondern in Form einer Schmelze vorliegen, so können die Komponenten auch ohne Lösungsmittel zugegeben werden. In einer weiteren Ausführungsform kann den gelösten Komponenten auch ein Fällungsmittel zugesetzt werden. Geeignete Fällungsmittel sind unter anderem lösliche Carbonate wie Natriumcarbonat oder Natriumhydrogencarbonat, wässrige Ammoniaklösung und/oder löslich Hydroxide wie Natrium- oder Kaliumhydroxid sowie Mischungen der aufgezählten und andere dem Fachmann bekannten basischen Fällmittel. In einer weiteren Ausführungsform wird das Fällungsmittel als wässrige Lösung zugegeben. Insbesondere mit eingeschlossen im Rahmen der Erfindung sind Fällungsverfahren, bei denen Temperatur und pH-Wert während der Fällung kontrolliert und /oder gesteuert werden. Bevorzugt ist ein pH-Wert im Bereich von 6,5 - 13, weiter vorzugsweise von 7,5 - 12. Insbesondere sind solche Verfahren mit eingeschlossen, bei denen die Fällung bei einem pH-Wert erfolgt, der größer als 7,5 ist und der konstant gehalten wird, und bei einer Temperatur, die über 20°C, vorzugsweise über 25 °C liegt. Ebenfalls mit eingeschlossen in das erfindungsgemäße Herstellverfahren sind Behandlungsschritte zur Waschung des gefällten Materiales, um unerwünschte Fremdkationen und -anionen zu entfernen.

In einer besonders bevorzugten Ausführungsform wird die Aluminiumquelle aus der Gruppe der hochreaktiven Aluminiumoxide und -hydroxide ausgewählt. Vorzugsweise enthält die Aluminiumquelle dispergierbare Primärpartikel, wobei eine Primärpartikelgröße kleiner gleich 500 nm bevorzugt ist.

Ebenfalls mit eingeschlossen im Rahmen der Erfindung ist die Nutzung von Alkoholaten, Carbonsäuresalzen, metallorganischen Verbindungen oder Komplexverbindungen der erfindungsgemäßen Ausgangsverbindungen von Al, Y, Ni, Co, Fe, Ce, La, Cu, Ga, Zn.

In einer besonders bevorzugten Ausführungsform wird die Aluminiumquelle als wässrige Dispersion mit saurem oder basischem pH eingesetzt. Besonders bevorzugt ist der Einsatz basischer Lösungen oder Dispersionen mit Polyaluminiumchlorid als Aluminiumquelle. Als beispielhaft für eine basische Polyaluminiumchlorid-Dispersion ist ein Produkt zu nennen, das von der Firma BK Giulini unter dem Handelsnamen Giufloc geführt wird.

Ein Aspekt der Erfindung betrifft auch das Verfahren zur Herstellung des Katalysators.

### Yttriumhaltiger Katalysator / YAG-Phase

Im Rahmen der vorliegenden Offenbarung umfasst der Begriff Katalysator oder erfindungsgemäßer Katalysatorvorläufer yttriumhaltige Materialien, die durch einen hohen Anteil an YAG-Phase gekennzeichnet sind. Dies bedeutet, dass der Katalysator oder erfindungsgemäße Katalysatorvorläufer in bestimmten Ausführungsformen auch Nebenphasen enthalten kann. Der Begriff YAG-Phase umfasst Phasen, die (i) Y₃Al₅O₁₂ (YAG) mit kubischer Yttrium-Aluminium-Garnet-Struktur, (ii) YAlO₃ (YAP) mit orthorhombischer und/oder hexagonaler Yttrium-Aluminium-Perovskit-Struktur und/oder (iii) Y₄Al₂O₉ (YAM) mit monokliner Perovskit-Struktur aufweisen. Falls der Katalysator Nebenphasen enthält, dann ist der Anteil an Nebenphase vorzugsweise im Bereich von 0 - 49 Gew.-%, weiter vorzugsweise im Bereich von 1 - 40 Gew.-% und noch weiter vorzugsweise im Bereich von 3 - 30 Gew.-%. Für den Fall, dass es sich um YAlO₃ (YAP) mit orthorhombischer oder hexagonaler Yttrium-Aluminium-Perovskit-Struktur handelt, ist es auch möglich, dass die orthorhombische und hexagonale Yttrium-Aluminium-Perovskit-Struktur nebeneinander vorliegen.
In einer weiter bevorzugten Ausführungsform ist es auch möglich, dass es sich bei dem Katalysator beziehungsweise erfindungsgemäßen Katalysatorvorläufer um ein Material handelt, bei dem die YAG-Phase als Hauptteil, d.h. bevorzugt größer als 75 Gew.-%, insbesondere größer als 85 Gew.-%, ganz besonders bevorzugt größer als 95 Gew.-% vorliegt, insbesondere die Phase (i) Y₃Al₅O₁₂ mit kubischer Yttrium-Aluminium-Garnet-Struktur.

Die Bestimmung des Anteils an YAG-haltiger Phase kann über diffraktometrische Methoden wie beispielsweise Röntgenpulverdiffraktometrie erfolgen. Auch analytische Verfahren wie Rietfeldverfeinerung können zur Auswertung verwendet werden. Beim Vorliegen von besonders feinteiligen oder nanokristallinen Materialien erfolgt die Bestimmung des Anteils an YAG-Phase durch eine optische Analyse nach Kubelka-Munk. Hierbei wird eine hochgesinterte Referenzprobe mit derselben Stöchiometrie wie die zu messende Probe (in Bezug auf den Anteil an kristalliner Phase) hergestellt und diese dann als Standardprobe festgelegt. Die zu messenden Proben werden gegen die Standardprobe als Referenz verglichen, wobei der Referenz zuvor ein Wert von hundert Prozent zugeordnet wurde. Die optische Analysenmethode ist bei nanokristallinen Materialien dann bevorzugt, wenn diese sehr kleine Kristallite aufweisen, deren Größe im Bereich der Wellenlänge des eingestrahlten Lichtes liegt. Geringe Kohärenzlängen liegen (bei diffraktometrischen Untersuchungen mit einer Röntgenwellenlänge von 0,154 nm) insbesondere dann vor, wenn die Kristallitgrößen kleiner 0,5 nm, vorzugsweise kleiner 0,4 und weiter vorzugsweise kleiner 0,3 nm sind. Solche nanokristallinen Materialien können derartig beschaffen sein, dass sie in der Pulverdiffraktometrie als röntgenamorph und in der UV-Analyse als kristallin erscheinen.

### Aluminiumquelle

Als Aluminiumquelle können prinzipiell alle aluminiumhaltigen Ausgangsstoffe eingesetzt werden, wobei eine bevorzugte Aluminiumquelle ausgewählt wird aus der Gruppe: Pseudoböhmit, Böhmit, Gibbsit, Bayerite , gamma-Aluminiumoxid, theta-Aluminiumoxid, Hydrotalcite wie Magnesiumhydrotalcit, kolloidale basische Aluminiumoxide wie beispielsweise das Produkt "Guifloc" von der Firma BK Guilini und andere dem Fachmann bekannte kolloidale Aluminiumquellen sowie Mischungen aus diesen. Insbesondere mit eingeschlossen sind unter anderem folgende Produkte der Firma Sasol: Disperal und alle Disperaltypen, Dispal, Pural, Puralox, Catalox, Catapal sowie auch alle Pural MG Typen.

Ohne eine Einschränkung des erfindungsgemäßen Verfahrens durch eine Theorie vorzunehmen, wird angenommen, dass die Oberflächenstruktur der hochreaktiven Aluminiumoxid oder - Hydroxidquelle wie beispielsweise theta-Aluminiumoxid, gamma-Aluminiumoxid, Pseudoböhmit, Böhmit, Gibbsit, Bayerit und Mischungen der vorgenannten und andere hochreaktiven Aluminiumoxid oder-hydroxidquelle einen wesentlichen Einfluss auf die Bildung eines aktiven Katalysators haben könnte. Vorzugsweise besteht das eingesetzte Böhmit aus dispergierbaren Partikeln, vorzugsweise ist die Primärpartikelgröße im Bereich kleiner oder gleich 500 nm. Der Begriff dispergierbare Partikel bedeutet, dass sich die in Wasser dispergierten beziehungsweise aufgeschlämmten Partikel eine stabile Dispersion bilden und sich erst nach langer Zeit (d.h. im Bereich von Stunden bis Tagen) auf dem Boden des Gefäßes abscheiden.

Vorzugsweise handelt es sich bei der Aluminiumquelle um einen nanopartikulären aluminiumhaltigen Ausgangsstoff beziehungsweise kolloidale Primärpartikel. Als nanopartikuläre aluminiumhaltige Ausgangsstoffe können beispielsweise peptidisierte Aluminiumhydroxide, -oxidhydrate oder -oxide eingesetzt werden. Die Peptidisierung kann mittels organischer Säuren, beispielsweise Essigsäure, Propionsäure, oder mittels anorganischen Säuren, beispielsweise Salpetersäure oder Salzsäure, vorgenommen werden. Die kolloidalen Partikel können mittels Stabilisatoren wie Tensiden, löslichen Polymeren oder Salzen versetzt sein, beziehungsweise können derartige Stabilisatoren im Herstellungsverfahren eingesetzt werden. Die kolloidalen Primärpartikel können auch aus partiell hydrolysierten Alkoholaten bestehen.

Ebenfalls mit eingeschlossen im Rahmen der Erfindung sind basische aluminiumhaltige Kolloide, sowie Aluminatlösungen oder Kolloide.

In einer speziellen Ausführungsform können auch Formkörper der vorgenannten Aluminiumoxid und -hydroxidquellen eingesetzt werden, die dann in Kontakt mit den anderen Vorläufermetallverbindungen gebracht werden. Beispiele für solche Formkörper können unter anderem Tabletten, Stranggut oder Granulate oder andere dem Fachmann bekannte Formkörper sein.

Der Einsatz einer hochreaktiven Aluminiumoxid oder Aluminiumoxid-Hydroxidquelle erweist sich insofern als besonders vorteilhaft, da dieser die Bildung erwünschter Phasen unterstützt.

Als Metallverbindungen werden jene Verbindungen bevorzugt eingesetzt, die in Lösungsmitteln löslich oder im Temperaturbereich bis 250 °C aufschmelzbar sind und die kostengünstig und großtechnisch verfügbar sind. Zu den bevorzugt eingesetzten Lösungsmittel zählen unter anderem folgende: Wasser, saure oder alkalische wässrige Lösungen, Alkohole wie Methanol, Ethanol, Propanol, iso-Propanol, Butanol, Ketone wie Aceton oder Methylethylketon, aromatische Lösungsmittel wie Toluol oder Xylole, aliphatische Lösungsmittel wie Cyclohexan oder n-Hexan, Ether und Polyether wie Tetrahydrofuran, Di-Ethylether oder Di-Glyme, Ester wie Methylacetat oder Ethylacetat.

Als Metallverbindungen sind weiterhin besonders bevorzugt lösliche Salze, Komplexverbindungen oder metallorganische Verbindungen. Bespiele für Salze sind unter anderem Nitrate, Nitrite, Carbonate, Halogenide, Acetate, Octanoate. Beispiel für Komplexverbindungen sind unter anderem EDTA-Komplexe, Komplexe mit Aminosäure oder Aminen, Komplexe mit Polyolen oder Polysäuren, Komplexe mit Phosphanen. Beispiele für metallorganische Verbindungen sind unter anderem Acetylacetonate, Alkoholate, Alkylverbindungen, Verbindungen mit Aromaten wie Cyclopentadienyladdukte.

Als aufschmelzbaren Metallverbindungen werden vorzugsweise Metallsalze eingesetzt, die sich während des Aufschmelzens nicht zersetzen oder bei denen die Zersetzung kinetisch stark gehemmt ist. Beispiele für solche Metallsalze sind unter anderem Nitrate, Nitrite, Halogenide, Chlorate, Bromate, Iodate, Sulfate, Sulfite. Besonders bevorzugt sind Nitrate, Nitrite oder Salzschmelzen, die Nitrate und Nitrite enthalten.

Geeignete Methoden zum Inkontaktbringen der Metallverbindungen mit der Aluminiumquelle sind unter anderem Imprägnierverfahren, bei denen die Metallverbindungen in einem geeigneten Lösungsmitteln gelöst werden, die anschließend durch eine Trocknung entfernt werden. Ein solcher Trocknungsschritt kann bei pulverförmig vorliegender Aluminiumquelle beispielsweise durch Gefrier- oder Sprühtrocknung vorgenommen werden. Alternativ kann auch eine Sprühgranulation erfolgen oder eine statische Trocknung der entstehenden Komposite erfolgen. Im Rahmen der Erfindung ist insbesondere die Imprägnierung ein bevorzugtes Verfahren.

Es können auch Fällungsverfahren zur Herstellung des Katalysators beziehungsweise des Katalysatorvorläufers zum Einsatz kommen. Dabei werden bevorzugt alle im sauren löslichen Komponenten in wässriger Lösung vorgelegt und dann mit einem basischen Fällungsmittel gefällt. Typischerweise werden dabei im sauren vorgelegt: Alumniumquelle, Yttriumquelle, ggf. eine Seltenerdquelle, sowie mindestens ein Element aus der Zink-, Kupfer-, Nickel-, Kobalt- und Eisenquelle. Die Fällung erfolgt bevorzugt mit einer wässrigen Lösung eines basischen Fällungsmittels, und zwar oberhalb eines pH-Wertes von 7,5. Bevorzugt werden der pH-Wert und die Temperatur bei der Fällung kontrolliert und konstant gehalten. Ebenfalls in die Erfindung mit eingeschlossen ist die Zugabe organischer Hilfsagentien zu dem Synthesesystem. Durch die organischen Hilfsagentien kann der Fällungsprozess dahingehend beeinflusst werden, dass ein besonders feinteiliges Fällungsgut gebildet wird. Als Hilfsagentien eignen sich beispielsweise organische Säuren, Komplexbildner und/oder oberflächenaktive Agentien wie Tenside in ionischer oder nichtionischer Form sowie wasserlösliche Polymere. Ebenfalls mit eingeschlossen ist das Inkontaktbringen einer basischen aluminiumhaltigen Lösung oder Dispersion mit einer sauren Lösung aller anderen Metallsalze, die zu einer Ausfällung führt. Eine solche Ausfällung kann direkt nach Zugabe, nach thermischer Behandlung und/oder Aufkonzentration erfolgen.

Weitere geeignete Verfahren zum Inkontaktbringen sind unter anderem eine Verknetung oder Mahlung einer Aluminiumquelle in Gegenwart der Yttriumverbindung und der weiteren Metallverbindung(en) mit oder ohne Zugabe von Flüssigkeiten. Insbesondere die Verknetung ist im Rahmen der Erfindung ein bevorzugtes Verfahren, da sie eine Kopplung mit einer nachfolgenden Extrusion erlaubt und somit für die Formgebung von Vorteil sein kann.

Im Rahmen der Erfindung werden insbesondere solche Metallsalze bevorzugt zur Synthese eingesetzt, die die Ausbildung der YAG-Phase in der Gegenwart von Zink, Kupfer, Nickel, Kobalt und/oder Eisen erleichtern.

Solche sind unter anderem Seltenerden beziehungsweise Lanthanoide wie Lanthan und Cer. Weitere Kationen, die im Rahmen der Erfindung bevorzugt sind, sind diejenigen, die wie Zink, Kupfer, Nickel, Kobalt und/oder Eisen in den YAG eingebaut werden können. Bevorzugt sind unter anderem Magnesium, Calcium, Gallium, Beryllium, Chrom, Mangan.

Völlig überraschend wurde gefunden, dass gerade auch die Durchführung der Hochtemperaturkalzinierung bei relativ niedrigen Temperaturen im Temperaturbereich von 750 °C bis 1300 °C, vorzugsweise im Temperaturbereich von 800°C bis 1200 °C, insbesondere bevorzugt in einem Temperaturbereich von 850 °C bis 1100 °C, zu Katalysatoren führt, die sehr gute katalytische Leistungseigenschaften in Bezug auf das erfindungsgemäße Verfahren zur Reformierung und/oder Hydrierung von Kohlenwasserstoffen und/oder Kohlenstoffdioxid aufweisen, und insbesondere auch in Verbindung mit der Herstellung von Synthesegas.

Für die Hochtemperaturkalzinierung und die Herstellung des Katalysators wurde somit ein vorteilhaftes Temperaturfenster aufgefunden, das eine hohe Energieeffizienz beim Herstellungsverfahren gewährleistet und das gleichzeitig die Herstellung eines sehr wirksamen Katalysators zur Reformierung und/oder Hydrierung von Kohlenwasserstoffen und/oder Kohlenstoffdioxid ermöglicht, der besonders günstige Leistungseigenschaften im Hinblick auf die Synthesegasherstellung aufweist.

Besonders bevorzugt ist die Durchführung des Herstellungsverfahrens des Katalysators beziehungsweise des Katalysatorvorläufermaterials in Gegenwart von Impfkristallen. Besonders bevorzugt werden Impfkristalle eingesetzt, die YAG-Struktur oder eine ähnliche Zusammensetzung wie die Zielphase aufweisen. Ganz besonders bevorzugt weisen die Impfkristalle eine hohe Kristallinität auf. Besonders bevorzugt ist die Durchführung des Herstellungsverfahrens des Katalysators beziehungsweise des Katalysatorvorläufermaterials in Gegenwart von Impfkristallen.

Ein möglicher Effekt, der durch die Zugabe der Impfkristalle erreicht werden kann, besteht in der Absenkung der Bildungstemperatur der YAG-Phase bei der Durchführung des erfindungsgemäßen Verfahrens beziehungsweise in einer Erhöhung der Ausbeute an YAG-haltiger Phase. Nicht ausgeschlossen ist auch, dass sowohl die Bildungstemperatur abgesenkt als auch die Ausbeute erhöht wird. Ein weiterer vorteilhafter Effekt in Verbindung mit der Zugabe von Impfkristallen besteht auch in einer möglichen Verkürzung der Kristallisationszeit.

In Bezug auf die Impfkristalle ist zu sagen, dass diese in einer bevorzugten Ausführungsform des erfindungsgemäßen Verfahrens aus einem Material mit YAG, YAP oder YAM-Phase - dem Zielprodukt - bestehen, bevorzugt aus YAG-Phase, weiter bevorzugt aus mit größer 95 Gew.-% YAG-Phase, weiter bevorzugt aus phasenreinem YAG. Darüber hinaus ist es auch bevorzugt, wenn die Impfkristalle eine geringe Korngröße, bevorzugt kleiner als 500 µm, insbesondere kleiner als 300 µm, ganz besonders bevorzugt kleiner als 100 µm, mit einer hohen spezifischen Oberfläche, bevorzugt größer als 5 m²/g, insbesondere größer als 10 m²/g, ganz besonders bevorzugt größer als 20 m²/g, aufweisen, beziehungsweise aus Agglomeraten mit geringer Kristallitgröße und einer hohen spezifischen Oberfläche bestehen.

Impfkristalle lassen sich dadurch aus einem entsprechenden YAG-Material herstellen, dass dieses einer geeigneten mechanischen und/oder chemischen Behandlung unterzogen wird, wie beispielsweise einer Mahlung im trockenen Zustand, Mahlung in Gegenwart von Wasser oder Mahlung in Gegenwart von Säuren oder Basen.

In einer besonders bevorzugten Ausführungsform werden die Impfkristalle durch intensive Vermengung mit der Aluminiumquelle in Kontakt gebracht. Diese Vermengung kann durch Aufmahlen, Kneten, Kollern oder andere dem Fachmann bekannte Methoden erfolgen. Die Vermengung der Aluminumquelle mit den Impfkristallen kann vor, während oder nach dem Inkontaktbringen mit der kupfer-, zink-, kobalt-, nickel- und/oder eisenhaltigen Verbindung und der zumindest einen weiteren Metallverbindung erfolgen.

Die Aluminiumoxidquelle kann zum einen in der Form eines Feststoffs wie Pulver oder Granulat und zum anderen in flüssiger Form bereitgestellt werden. Falls die Aluminiumoxidquelle in flüssiger Form vorliegt, so ist es bevorzugt, dass die aluminiumhaltigen Spezies in dem Lösungsmittel dispergiert sind beziehungsweise in diesem als kolloidale Partikel vorliegen. Die Stabilität der kolloidalen Aluminas beziehungsweise auch die Bildung der kolloidalen Aluminas lässt sich dadurch verbessern, dass ein pH-Wert gewählt wird, der entweder im Bereich von 2 bis 4,5 oder im Bereich von 8 bis 14 liegt. Geeignete Agentien zur Herstellung oder Stabilisierung der kolloidalen Aluminas sind Säuren wie HNO₃, Essigsäure oder Ameisensäure oder Basen wie beispielsweise wässrige NaOH-, KOH- oder Ammoniaklösung.

In einer bevorzugten Ausführungsform des erfindungsgemäßen Verfahrens wird eine kolloidale Aluminalösung eingesetzt, die peptidisierte Aluminapartikel aufweist und deren pH-Wert im Bereich von 2 bis 4,5 liegt.

In einer weiter bevorzugten Ausführungsform des erfindungsgemäßen Verfahrens wird eine Aluminalösung eingesetzt, die eine oder mehrere basisch behandelte Aluminiumquellen aufweist und deren pH-Wert im Bereich von 8 bis 14 liegt.

Die Aluminiumquelle wird mit zumindest einer Metallverbindung in Kontakt gebracht. Bei der Zugabe zu der als Flüssigkeit vorliegenden Aluminiumquelle wird insbesondere darauf geachtet, dass keine Ausfällung der Metallverbindungen oder der Kolloide zu beobachten ist. Die Zugabe der Impfkristalle kann vor, während oder nach der Zugabe der Metallverbindungen geschehen. Alternativ können die Impfkristalle auch nach dem Trocknungsschritt zugegeben werden.

In einer weiteren bevorzugten Ausführungsform des erfindungsgemäßen Verfahrens wird eine dispergierbare nanopartikuläre Aluminiumoxidquelle als feinteiliges Pulver eingesetzt. Das feinteilige Pulver besteht aus Primärpartikeln kleiner gleich 500 nm, welche als Agglomerate mit einem D₅₀-Wert von 1 bis 100 µm vorliegen.

Die Aluminiumquelle wird in dieser bevorzugten Ausführungsform mit zumindest einer Metallverbindung in Kontakt gebracht. Die Metallverbindung kann entweder als Lösung oder als Feststoff zugegeben werden. Im Fall eines Feststoffs wird anschließend eine Flüssigkeit zugegeben. Bei der Zugabe der Lösung beziehungsweise der Flüssigkeit wird insbesondere darauf geachtet, dass eine homogene, teigförmige Masse entsteht, die knetbar ist und die sich durch eine sehr innige Vermischung der Aluminiumoxidquelle und der Metallverbindung auszeichnet. Die Zugabe der Impfkristalle kann vor oder nach der Zugabe der Metallverbindungen geschehen. Ein wesentliches Merkmal dieser bevorzugten Ausführungsform beruht darin, dass der Trocknung (d.h. dem Schritt (iv)) die Extrusion als Formgebungsschritt (d.h. Schritt (vi)) vorgeschaltet ist.

In einer anderen bevorzugten Ausführungsform des erfindungsgemäßen Verfahrens wird das feinteilige Pulver der Aluminiumquelle mit zumindest einer aufschmelzbaren Metallverbindung in Kontakt gebracht. Die innige Durchmischung der Aluminiumoxidquelle und der aufschmelzbaren Metallverbindung wird bei einer Temperatur im Bereich von 25°C bis 250°C durchgeführt. Bei der Wahl der Temperatur wird insbesondere darauf geachtet, dass diese über dem Schmelzpunkt der Metallverbindung liegt. Durch das Aufschmelzen der Metallverbindung wird eine besonders homogene Verteilung der Komponenten im Gemisch erreicht. Die Zugabe der Impfkristalle kann vor, während oder nach der Zugabe der Metallverbindungen geschehen. Alternativ können die Impfkristalle auch erst nach dem Abkühlen des Gemischs zugegeben werden.

Die Tieftemperaturkalzinierung des getrockneten Gemisches beziehungsweise des abgeformten und getrockneten Materials, das nach den oben genannten Verfahrensschritten erhalten wird, dient grundsätzlich dazu, die Anionen aus der eingesetzten Metallverbindungen zu entfernen und diese in die entsprechende Metalloxide umzuwandeln. Die Temperatur bei der Kalzinierung hängt von den eingesetzten Metallverbindungen ab, vorzugsweise ist die Temperatur kleiner gleich 550 °C und weiter bevorzugt im Temperaturbereich von 150°C bis 550 °C.

Die Hochtemperaturkalzinierung des abgeformten und getrockneten Gemisches beziehungsweise die Tieftemperaturkalzinierung des Gemisches, das nach oben genannten Verfahrensschritten erhalten wurde, sind wesentliche Prozessschritte bei der Herstellung des Katalysators. Die Temperatur bei der Hochtemperaturkalzinierung ist bevorzugt größer oder gleich 750 °C, insbesondere größer oder gleich 800 °C, vorzugsweise ist die Temperatur größer oder gleich 850 °C und weiter bevorzugt ist die Temperatur größer oder gleich 900 °C.

Darüber hinaus ist es besonders bevorzugt, die Kalzinierung über eine Zeitdauer durchzuführen, die größer ist als 0,5 Stunden, weiter vorzugsweise größer als 1 Stunde und insbesondere vorzuziehen ist eine Zeitdauer größer als 2 Stunden.

In einer weiteren bevorzugten Ausführungsform des erfindungsgemäßen Verfahrens können die Tieftemperaturkalzinierung (v) und Hochtemperaturkalzinierungsschritte (vii) in einem zusammenhängenden Prozessschritt durchgeführt werden. Dies ist besonders vorteilhaft, wenn dem Trocknungsschritt ein Formgebungsschritt vorgeschaltet ist.

Falls bei der Kalzinierung die Zieltemperatur von 750 °C unterschritten wird, so könnte eine Herstellung des Katalysators negativ beeinträchtigt werden, da ggf. die Bildung von YAG fehlschlägt beziehungsweise ein zu geringer Anteil an YAG gebildet wird. Wird eine Kalzinierungstemperatur gewählt, die oberhalb des geeigneten Temperaturbereichs liegt, so werden zwar Phasen gebildet, die eine gewisse katalytische Aktivität besitzen, jedoch weisen die Materialien eine zu geringe Oberfläche auf. Die obere Grenze bei der Kalzinierung für die Kalzinierungstemperatur liegt bevorzugt bei 1300 °C, vorzugsweise bei 1250 °C und weiter vorzugsweise bei 1200 °C.

Es ist denkbar, dass die Erfindung durch die Angabe von speziellen Kalzinierungsbedingungen weiter spezifiziert werden könnte. Im großtechnischen Betrieb ist jedoch eine sehr lange Zeitdauer für die Kalzinierung unwirtschaftlich und unerwünscht.

Für die spezielle Applikation des Materials als Katalysator zur Herstellung von Synthesegas ist eine hohe spezifische Oberfläche förderlich. Im Rahmen der Erfindung sind insbesondere Materialien mit Oberflächen größer als 2 m²/g bevorzugt, besonders bevorzugt sind Materialien mit Oberflächen größer als 4 m²/g, ganz besonders bevorzugt Materialien mit Oberflächen größer als 8 m²/g, ganz besonders bevorzugt sind Materialien mit Oberflächen größer als 15 m²/g.

Ein Formgebungsprozess ist für die Herstellung des Katalysators von Bedeutung, damit der Katalysator in geeigneter Weise einem Rohrreaktor eingesetzt werden kann. Dies hängt auch damit zusammen, dass das kolloidal gelöste Aluminiumhydroxid beziehungsweise die basische Aluminiumpolychloriddisperison, welches besonders bevorzugt Aluminiumoxidquelle eingesetzt wird, besonders feinteilig sind und eine hohe Reaktivität aufweisen.

Ein besonders feinteiliges Katalysatormaterial würde zu Problemen in der technischen Anwendung führen. Daher ist es auch besonders vorteilhaft, dass sehr feinteilige Ausgangskomponenten eingesetzt werden können, die dann mit einem Abformungsschritt zu besonderen Katalysatoren führen. Die direkte Einbringung eines sehr feinteiligen Katalysators in einen Rohrreaktor würde zu einem hohen Druckverlust beziehungsweise zur vollständigen Verstopfung des Reaktors führen, wodurch das katalytische Reformierungsverfahren beeinträchtigt würde.

Das nach dem erfindungsgemäßen Verfahren hergestellte Material kann bei der Reformierung zur Herstellung von Synthesegas in der Form von Schüttgut, Tabletten oder Stranggut eingesetzt werden. Die Wahl der geeigneten Katalysatorform richtet sich nach den jeweils vorliegenden Prozessbedingungen, die für die Herstellung des Synthesegas von Bedeutung sind.

Die Formgebung wird erfindungsgemäß und bevorzugt nach den Prozessschritten (iii) oder (v) durchgeführt; es ist jedoch auch denkbar, die Formgebung nach Prozessschritt (vii) vorzunehmen, wobei jedoch nicht klar ist, ob in jeder Beziehung alle bevorzugten Eigenschaften der Erfindung erzielt werden können, wenn die Formgebung erst nach Prozessschritt (vii) erfolgt.

Die Herstellung eines Tablettenformkörpers erfolgt durch die Schritte (x.1) Kompaktierung, (x.2) Siebung und (x.3) Tablettierung. Dem für die Kompaktierung und Tablettierung eingesetzten Katalysatormaterial beziehungsweise Vorläufermaterial können Binder und Schmiermittel zugesetzt werden. Als Schmiermittel können beispielsweise Graphit oder Stearinsäure verwendet werden. Vorzugsweise wird Graphit eingesetzt. Die Menge an Schmiermittel beträgt üblicherweise nicht mehr als 10 Gew.-% bezogen auf das Katalysatormaterial.

Darüber hinaus ist es auch möglich, die Zielfraktion mittels einer Kompaktierungsmaschine herzustellen, die gleich mehrere Schritte hintereinander vornimmt. Das mit der Kompaktierungsmaschine hergestellte Schüttgut kann möglicherweise eine geringere mechanische Stabilität aufweisen als ein Material, das mit einer Pressmaschine hergestellt wurde.

Darüber ist es auch möglich, dass ein Formkörper mittels eines Extrusionsschrittes hergestellt wird. Eine solche Extrusion kann nach Schritt (ii) oder Schritt (iii) der Herstellung erfolgen.

Davon abgesehen ist es jedoch auch möglich, dass die Suspension mittels eines Sprühtrockners getrocknet wird und nachfolgend einem Kalzinierungsprozess unterzogen wird.

Als Bindermaterial zur Kompaktierung und Tablettierung können dem Katalysator ein Oxid oder mehrere Oxide zugesetzt werden. Oder es kann die Bildung von bestimmten Oxide durch spezielle Verfahrensmerkmale oder Prozessschritte während der Synthese so gesteuert werden, dass der Binder während der Synthese entsteht. Derartige Verfahrensmerkmale oder Prozessschritte können unter anderem sein: bevorzugte Wahl der Stöchiometrie der Ausgangsverbindungen, bevorzugte Wahl der Art der Ausgangsverbindungen und insbesondere der Aluminiumquelle, bevorzugte Wahl der thermischen Behandlungsschritte. Ein besonders geeignetes Bindermateriales wirkt sich positiv auf die Ausbildung einer hohen Oberfläche des Katalysators aus.

Beispiele für solche Oxide, die sich aus dem Bindermaterial während der Kalzinierung bilden und die besonders bevorzugte Nebenphasen darstellen, sind unter anderem: theta-Aluminiumoxid, alpha-Aluminiumoxid, Yttriumaluminat (YAlO₃), yttriumstabilisiertes Aluminiumoxid, yttriumstabilisiertes Aluminiumoxidhydroxid.

In einer weiteren Ausführungsform ist es beispielsweise möglich, den Katalysator beziehungsweise das Katalysatorvorläufermaterial durch einen Beschichtungsprozess auf ein keramisches Trägermaterial aufzuziehen. Als Trägermaterial kann ein keramischer Wabenkörper oder andere Formkörper verwendet werden.

Zur Herstellung eines besonders wirksamen Katalysators ist es erforderlich, dass die Stöchiometrie der Elemente, die das Katalysatormaterial bilden, in einem bestimmten Vorzugsbereich liegt.

Im Rahmen der vorliegenden Abhandlung wird der Vorzugsbereich der Zusammensetzung jeweils auf die metallischen Elemente bezogen und auf Basis von Molprozent angegeben. Die Zahlen sind auf hundert Anteile zu ergänzen, wobei das Vorliegen von Sauerstoff nicht mit berücksichtigt wird.

Bevorzugt ist im Rahmen der Erfindung ein yttriumhaltiges Material, dessen Kupfer-, Zink-, Nickel-, Eisen und/oder Kobaltgehalt vorzugsweise in einem Bereich von in einem Bereich von 0,01 - 10 mol-%, vorzugsweise 0,02 - 7 mol-%, weiter bevorzugt 0,1 - 5 mol-%.

Bevorzugt ist im Rahmen der Erfindung ein yttriumhaltiges Material, das zumindest eine weitere Kationenspezies (I) aufweist, welche ausgewählt ist aus der Gruppe der Seltenerden, wobei Seltenerden wie Ce, Pr, La, Tb, Nd, Eu besonders bevorzugt sind und wobei der Gehalt an dieser zumindest einen Kationenspezies vorzugsweise in einem Bereich von 0,01 - 10 mol-%, weiter vorzugsweise in einem Bereich von 0,02 - 8 mol-% und insbesondere bevorzugt in einem Bereich von 0,03 - 5 mol-% liegt.

Bevorzugt ist im Rahmen der Erfindung ein yttriumhaltiges Material, das zumindest eine weitere Kationenspezies (II) aufweist, welche ausgewählt ist aus der Gruppe Mg, Ca, Sr, Ba, Ga, Be, Cr, Mn wobei der Gehalt an dieser zumindest einen Kationenspezies vorzugsweise in einem Bereich von 0,01 - 10 mol-%, weiter vorzugsweise in einem Bereich von 0,02 - 8 mol-% und insbesondere bevorzugt in einem Bereich von 0,03 - 5 mol-% liegt.

In einer bevorzugten Ausführungsform handelt es sich bei der Kationenspezie der Seltenerden um Ce, Pr und/oder La. Insbesondere bevorzugt werden diese Kationenspezies (I) aus der Gruppe Ce, Pr und/oder La in Kombination mit den Kationenspezies (II) aus der Gruppe Mg und Ga, wobei es im Rahmen der Erfindung bevorzugt ist, wenn der Anteil an Kationenspezies geringer ist als 10 mol-%, insbesondere geringer als 5 mol-%, ganz besonders bevorzugt geringer als 2 mol-%.

Nachfolgend werden einige Beispiele für diejenigen Materialien aufgeführt, die eine bevorzugte Zusammensetzung aufweisen:
Der Katalysator ist dadurch gekennzeichnet, dass dieser ein Yttriumaluminiumgarnet und/oder monoklines Yttriumaluminat enthält, dass der Katalysator Yttrium und zumindest ein weiteres Element aus der Gruppe Cu, Zn, Ni, Co, Fe enthält, wobei der Yttriumgehalt im Bereich von 15 - 80 mol-%, vorzugsweise 17 - 70 mol-% und weiter bevorzugt im Bereich von 20 - 70 mol-%, der Gehalt an dem zumindest einem weiteren Element aus der Gruppe Cu, Zn, Ni, Co, Fe in einem Bereich von 0,01 - 10 mol-%, vorzugsweise 0,02 -7 mol-%, weiter bevorzugt 0,1 - 5 mol-%, der Gehalt an Al in einem Bereich von 10 - 90 mol-%, vorzugsweise 20 - 85 mol-% und weiter bevorzugt im Bereich von 30 - 80 mol-% liegt.

Ebenfalls in die Erfindung eingeschlossen sind Materialien, die Promotoren aus der Gruppe der Platinmetalle enthalten. Die platinmetallhaltigen Ausführungsformen sind zumeist dadurch gekennzeichnet, dass die Katalyatormaterialien nur geringe Mengen an Platinmetallen enthalten. Bevorzugt sind Dotierungen mit Platinmetallen bezogen auf das oxidische Material im Bereich von 0,1 bis 1 Gewichtsprozent. Eine solche Dotierung kann während der Herstellschritte (i) bis (v) beziehungsweise (i) bis (vi) erfolgen oder in einem Nachbehandlungsschritt.

Für den Fall, dass die Herstellung des Katalysators durch Imprägnierung in Verbindung mit einer Metallsalzlösung erfolgt, so ist folgendes zu sagen: Als Metallsalze eignen sich alle Salze, die in einem Lösemittel aufgelöst werden können, um somit eine möglichst homogene Verteilung der Metallspezies auf der Oberfläche der Aluminiumquelle, vorzugsweise des Böhmits, bewirken zu können.

Beispielsweise handelt es sich bei den zugeführten Metallsalzen um Nitrate beziehungsweise um hydrathaltige Nitrate. Als bevorzugtes Lösemittel wird Wasser verwendet.

Vorzugsweise enthält die Aluminiumquelle nur eine geringe Menge an Nitrat beziehungsweise ist nitratfrei. Bei Betrachtung des Nitratgehaltes und des Gesamtgehaltes an allen metallischen Anteilen im Synthesesystem (d.h. Al zusammen mit Y, Cu, Zn, Ni, Co, Fe und den weiteren Metallen), so ist der Nitratgehalt vorzugsweise kleiner als 40 mol-%, weiter bevorzugt kleiner als 25 mol-% und noch weiter bevorzugt kleiner als 18 mol-%.

Es ist denkbar, dass der Imprägnierlösung edelmetallhaltige Salze als Nebenbestandteile zugesetzt werden, die als Promotoren wirken und die zu einer Aktivitätssteigerung des Katalysators führen. Jedoch ist auch zu berücksichtigen, dass die Verwendung von edelmetallhaltigen Promotoren zu einer Kostensteigerung des Katalysators führen kann. Bevorzugte Edelmetalle für eine Promotierung sind unter anderem Platin, Rhodium, Palladium. Die Menge der einzusetzenden Promotoren ist vorteilhaft kleiner als 5 Gew.-%, bevorzugt kleiner als 2 Gew.-%, ganz besonders bevorzugt kleiner als 1 Gew.-%.

Im Hinblick auf die Einbringung der edelmetallhaltigen Promotoren ist zu sagen, dass diese während der Katalysatorsynthese zugeführt werden können oder dass diese auf dem fertigen Katalysator abgeschieden werden können.
Im Rahmen der Erfindung beschreibt der Begriff Katalysatorvorläufer ein erfindungsgemäßes Material, dass noch keinem gezielten Vorbehandlungsschritte (z.B. beschrieben in Technische Katalyse, Jens Hagen, Wiley 1996) unterzogen wurde. Die Vorbehandlung erfolgt im Vorfeld der Nutzung des Katalysatormaterials im Rahmen des erfindungsgemäßen Verfahrens, bei welchem das Katalysatormaterial Feedkomponenten des Prozesses ausgesetzt wird. Gängige Vorbehandlungsschritte sind dadurch gegeben, dass das Katalysatorvorläufermaterial einem Wasserstoffgasstrom, einem Formiergas sowie anderen reduzierenden oder oxidierenden Spezies ausgesetzt wird. Insbesondere wird die Behandlung bei erhöhten Temperaturen oder hydrothermalen Bedingungen durchgeführt; auch andere Vorbehandlungsmethoden sind dem Fachmann bekannt und können hierbei verwendet werden. Das Katalysatorvorläufermaterial liegt zumeist in oxidischer Form vor. Dies bedeutet, dass metallische Komponenten - wie Kupfer, Nickel, Eisen, Zink und Kobalt - eine Oxidationsstufe von grösser als Null aufweisen.

Im Rahmen der Erfindung beschreibt der Begriff Katalysator ein Material, dass bereits Vorbehandlungsschritten unterzogen wurde. Bei den Vorbehandlungsschritten handelt es sich beispielsweise darum, dass der Katalysatorvorläufer einzelnen oder mehreren Feedkomponenten und/oder dem finalen Feedgases des Prozesses ausgesetzt wurde. Bei dieser Exposition konnte sich der Katalysatorvorläufer zum Katalysator umwandeln.

Zu derartigen Vorbehandlungsschritten, denen ein solcher Katalysator exponiert wurde, können unter anderem die folgende Schritte zählen: Behandlung mit Wasserstoff, Formiergas, anderen reduzieren oder oxidierenden Agentien, insbesondere bei erhöhten Temperaturen oder hydrothermalen Bedingungen oder andere dem Fachmann bekannte Vorbehandlungsmethoden. Solche Vorbehandlungsmethoden können im oder außerhalb des Reaktors durchgeführt werden. Die Vorbehandlungsschritte sollen dazu führen, dass der Katalysator in einen für die Durchführung der Reaktion günstigen Zustand überführt wird. Es kommt hierbei zu einer physikochemischen Veränderungen des Materials. Solche Veränderungen können unter anderen sein: Veränderungen der Textur, Veränderungen der Kristallinität, Veränderungen der Oxidationsstufen einzelner oder mehrerer Metalle oder anderer Elemente, Bildung metallischer Nanopartikel, Ausbildung einer oder mehrerer spezieller katalytisch aktiver Phasen, teilweise oder vollständige Belegung mit organischen Verbindungen oder Koks, vollständige oder teilweise Rekristallisation, Ausbildung katalytisch aktiver amorpher oder teilamorpher Oberflächenstrukturen, deren Zusammensetzung sich vom Bulkmaterial unterscheidet, oder andere dem Fachmann bekannte Phänomene, die bei der Exposition eines Katalysators oder Katalysatorvorläufers auftreten können. Solche oben beschriebenen physikochemischen Umwandlungen sind in der Regel durch analytische Methoden messbar. Im Rahmen der vorliegenden Erfindung ist es jedoch auch eingeschlossen, dass sich zwischen Katalysator und Katalysatorvorläufer keine wesentlichen Unterschiede vorliegen oder dass Umwandlungen auftreten, die analytisch nicht messbar sind.

### Katalyseverfahren

Die Anwendungsgebiete des Katalysator oder erfindungsgemäßen Katalysatorvorläufers sind äußerst vielseitig und so eignet sich die Verwendung des Katalysators oder des erfindungsgemäßen Katalysatorvorläufers insbesondere zur katalytischen Reformierung, zur partiellen katalytisch Oxydation von Kohlenwasserstoffen oder kohlenwasserstoffhaltigen Verbindungen (cPOx), zur autothermalen Reformierung (ATR), zur Trockenen Reformierung (DryRef), zur Hochtemperatur Kohlendioxidhydrierung und /oder Reformierung von Kohlenwasserstoffen in der Gegenwart von Methan sowie insbesondere zur Herstellung von Syngas. Neben Wasserstoff enthalten die Eduktfluidströme vorteilhaft zumindest ein Gas aus der Gruppe CO₂, CO, O₂, CH₄ und H₂O.

Insbesondere betrifft die Erfindung ein Verfahren zur Hochtemperatur Kohlendioxidhydrierung, und/oder zur Reformierung von Kohlenwasserstoffen, vorzugsweise Methan, bei dem der Katalysator beziehungsweise das erfindungsgemäße Katalysatorvorläufermaterial eingesetzt wird, wobei das Verfahren die folgenden Schritte umfasst:
(a.1) Inkontaktbringen von einem Eduktgas, das vorzugsweise Kohlenwasserstoffe, vorzugsweise Methan, und ggf. Wasserstoff und/oder Kohlendioxid enthält, mit dem Katalysator beziehungsweise Katalysator, der nach dem erfindungsgemäßen Verfahren hergestellt wurde,
(a.2) Beheizung des Reaktors beziehungsweise des darin befindlichen Katalysators beim Inkontaktbringen mit dem Reformiergas bei einer Temperatur, die größer ist als 500 °C, vorzugsweise größer als 700 °C, vorzugsweise größer als 800 °C und weiter vorzugsweise größer als 850 °C,
(a.3) Betrieb des Reaktors während der Durchführung der Reaktion bei einem Prozessdruck, der größer ist als 1 bar, vorzugsweise größer als 5 bar, weiter vorzugsweise größer als 10 bar, insbesondere bevorzugt größer als 15 bar, und weiter insbesondere bevorzugt größer als 20 bar,
(a.4) Beaufschlagung des Katalysators mit einem Gasstrom dessen GHSV in einem Bereich von 500 bis 300.000 hr⁻¹ liegt, vorzugsweise in einem Bereich von 1.500 bis 200.000 hr ¹, weiter vorzugsweise in einem Bereich von 2.000 bis 150.000 hr⁻¹, und weiter vorzugsweise in einem Bereich von 2.000 bis 100.000 hr⁻¹.

In einer weiter bevorzugten Ausführungsform des erfindungsgemäßen Verfahrens ist das beim Verfahren eingesetzte Eduktgas dadurch gekennzeichnet, dass dieses mehr als 40 Vol.-% Wasserstoff, Kohlendioxid und/oder Kohlenwasserstoffe, vorzugsweise Methan, enthält, vorzugsweise mehr als 50 Vol.-% Wasserstoff, Kohlendioxid und/oder Kohlenwasserstoffe, vorzugsweise Methan, und besonders bevorzugt mehr als 70 Vol.-% Wasserstoff, Kohlendioxid und/oder Kohlenwasserstoffe, vorzugsweise Methan. Weitere Komponenten, welche im Reformiergas enthalten sind, umfassen Wasser und/oder Umlaufgase aus den erfindungsgemäßen oder weiteren nachgeschalteten Prozessen.
In einer weiter bevorzugten Ausführungsform des erfindungsgemäßen Verfahrens ist dem Hochtemperatur Kohlendioxidhydrierung, und/oder der Hochtemperatur-Reformierung von Kohlenwasserstoffen ein Aktivierungsprozess vorgeschaltet. Durch den Aktivierungsprozess ist es möglich, den Katalysator in kontrollierter Weise auf den Startpunkt der Prozessparameter einzustellen.
Der Aktivierungsprozess umfasst die thermische Behandlung des Katalysators in einer reduzierenden Gasatmosphäre bei einer Temperatur im Bereich von 300 °C bis 1400 °C. Vorzugsweise wird der Katalysator unter Verwendung eines kontrollierten Aufheizprozesses auf die Prozesstemperatur geheizt. Die Aufheizrate liegt vorzugweise in einem Bereich von 1 °C/min bis 30 °C/min, wobei ein Bereich von 5 °C/min bis 15 °C/min bevorzugt ist.
Vorzugsweise ist der Aktivierungsprozess mit einer Konditionierung des Katalysators gekoppelt; vorzugsweise ist die Konditionierung der Aktivierung nachgeschaltet. Unter Konditionierung ist ein Vorgang zu verstehen, bei dem der Katalysator stufenweise an die Prozessparameter der Zielreaktion herangeführt wird. Dies hängt damit zusammen, dass für den Startpunkt des Verfahrens teilweise andere Bedingungen erforderlich sein können als für den Dauerbetrieb. Durch die Konditionierungsschritte wird eine unkontrollierte Verkokung des Katalysators während des sogenannten Anfahrens wirksam unterbunden.
Die Konditionierung des Katalysators besteht beispielsweise darin, dass der Katalysator in Gegenwart von Kohlendioxid, Kohlenmonoxid, Methan, Wasserdampf und/oder Wasserstoff auf die Prozesstemperatur geheizt wird. Es ist auch möglich, dass der Katalysator in Gegenwart von Wasserdampf konditioniert wird.

Das Eduktfluid weist eine bevorzugte Zusammensetzung auf, bei der der Anteil an Wasserstoff, Kohlendioxid und Kohlenwasserstoffen, vorzugsweise Methan insgesamt größer als 40 Vol.-%, bevorzugt größer als 50 Vol.-% und insbesondere größer als 70 Vol.-% ist. In bestimmten Ausführungsformen des erfindungsgemäßen Verfahrens kann das Reformiergas auch Kohlenmonoxid als Bestandteil enthalten. In bestimmten Ausführungsformen des erfindungsgemäßen Verfahrens kann das Reformiergas auch Sauerstoff und/oder Wasser als Bestandteile enthalten. In diesen Ausführungsformen, die sich auf die Verwendung der Katalysatoren zur Durchführung von SMR, ATR, cPOx -Reaktionen beziehen, ist der Anteil an O₂ und H₂O größer als 5 Vol.-%, vorzugsweise größer als 10 Vol.-% und ganz besonders bevorzugt größer als 20 Vol.-%.

Vorzugsweise ist das Produkt des Verfahrens ein Synthesegas im Zusammensetzungsbereich Wasserstoff zu Kohlenmonoxid in einem Volumenverhältnis größer gleich eins. Ein bevorzugtes Verhältnis von Wasserstoff zu Kohlenmonoxid liegt im Bereich von 4 zu 0,1 bis null zu 1, besonders bevorzugt im Bereich von 3,5 zu 1 bis 0,1 zu 1, ganz besonders bevorzugt im Bereich von 3 zu 1 bis 0,1 zu 1.

In einer besonderen Ausführungsform wird mit dem Verfahren ein Produktgas mit einem Volumenanteil an Kohlenmonoxid von über 90% hergestellt.

Vorzugsweise liegen Wasserstoff und das Kohlendioxid im Eduktfluid in einem Volumenverhältnis größer gleich eins vor. Ein bevorzugtes Verhältnis von Wasserstoff zu Kohlendioxid liegt im Bereich von 5 zu 1 bis 1 zu 1, besonders bevorzugt im Bereich von 4,5 zu 1 bis 1 zu 1, ganz besonders bevorzugt im Bereich von 4 zu 1 bis 1 zu 1.

Falls das Eduktfluid kohlenwasserstoffhaltigen Ausgangsgas enthält, so liegen Kohlendioxid und das kohlenwasserstoffhaltige Ausgangsgas bevorzugt in einem Verhältnis von größer als 1 zu 1, besonders bevorzugt größer als 4 zu 1, ganz besonders bevorzugt größer als 5 zu 1 vor.

Dem Eduktfluid kann während des Verfahrens Wasserdampf zugeführt werden. Vorzugsweise ist der Anteil an Wasserdampf im Eduktfluid gleich oder kleiner 30 vol.-%, weiter vorzugsweise gleich oder kleiner 20 vol.-% und noch weiter bevorzugt gleich oder kleiner 15 vol.-%.

Aus verfahrenstechnischem Gründen können dem Eduktgas noch Standardgase oder Hilfsgase zugesetzt werden. Bei dem Standardgas handelt es sich beispielsweise um ein Edelgas, das mit einem Mengenanteil von 1 bis 5 vol.-% zugesetzt wird. Die Zugabe eines internen Standards bei Laboruntersuchungen dient der Bestimmung der Widerfindungsrate.

Bei einer bevorzugten Verfahrensführung wird mittels des erfindungsgemäßen Verfahrens ein Synthesegas hergestellt, das ein H₂/CO-Verhältnis aufweist, das im Bereich von 0,85 bis 1,4 liegt, weiter vorzugsweise liegt das H₂/CO-Verhältnis in einem Bereich von 0,9 bis 1,2 und noch weiter bevorzugt in einem Bereich von 0,95 bis 1,1.

Mittels des erfindungsgemäßen Verfahrens ist es möglich, den Prozess bei drastischen Prozessbedingungen, insbesondere bei hohen Temperaturen und hohen Lasten, durchzuführen, ohne dass hierbei eine signifikante Menge an Koks auf dem yttriumhaltigen Katalysator abgeschieden wird. Als signifikante Koksabscheidung wird im Rahmen der Erfindung eine Abscheidung von über 2 Gew.-% Koks auf dem Katalysator betrachtet, typischerweise machen sich Koksablagerungen oberhalb dieses Wertes durch einen starken Anstieg im Druckabfall bemerkbar. Bevorzugt liegt die Koksablagerung bei < 2 Gew.-% Kohlenstoffgehalt in Bezug auf den eingesetzten Katalysator, besonders bevorzugt < 1 Gew.-%, weiter bevorzugt < 0,5 Gew.-%, insbesondere < 0,2 Gew.-%. Aufgrund der sehr hohen thermischen Stabilität und der Betriebsbeständigkeit unter Druck bei Drücken von 5 bis 40 bar des Katalysators kann dieser über lange Prozesslaufzeiten, mehrere tausend Stunden, hinweg eingesetzt werden.

Die Durchführung der Reformierung bei hohen Prozessdrücken, insbesondere bei größer als 5 bar, bevorzugt größer als 10 bar, ganz besonders bevorzugt bei größer als 20 bar, ist vorteilhaft, da ein Synthesegas gebildet wird, das auch unter einem sehr hohen Druck steht. Das Synthesegas kann für weitere Prozesse eingesetzt werden, bei denen das Synthesegas als Ausgangsstoff unter hohem Druck vorliegen muss. Durch das Vorliegen eines Hochdruckgases können Kompressoranlage und Kompressionsschritte eingespart werden. Bei den Folgeprozessen kann es sich um Methanol-Synthese (50-100 bar), Fischer-Tropsch-Synthese (40-60 bar) oder sonstige Gas-to-Liquid-Synthesen handeln. Vorzugsweise werden das mittels das Synthesegas für diejenigen Folgeprozesse eingesetzt, bei denen ein H₂/CO-Verhältnis erforderlich ist, das auch im Rahmen des erfindungsgemäßen Verfahrens unter Verwendung der yttriumhaltigen Katalysatoren bereitgestellt werden kann.

Da mittels des erfindungsgemäßen Verfahrens ein Synthesegas bereitgestellt werden kann, das unter einem hohen Druck steht, ist das erfindungsgemäße Verfahren denjenigen Verfahren, die aus dem Stand der Technik bekannt sind, überlegen.

### Beispiele

### Beispiel 1:

### Synthese von Fe, Co, Ni bzw. Cu modifizierten YAG's mit der allgemeinen Zusammensetzung Y_{2,68}Me_{0,32}Al₅O₁₂ (Me = Fe, Co, Ni bzw. Cu) über die "Gilufloc Route" für je 30g oxydisches Produkt

### Probe 1: Y_{2,68}Fe_{0,32}Al₅O₁₂

In einem 600mL Becherglas wurden 55,976g Gilufloc 83 (Firma Giulini; Al Gehalt 12,4wt%) eingewogen und bei Raumtemperatur auf einem Magnetrührer gerührt (50mm Rührfisch, 150rpm). In einem separaten Becherglas wurden 53,306g Yttrium(III)nitrat-Hexahydrat (Firma Alfa Aesar, Reinheit 99,9%) und 6,679g Eisen(III)nitrat-Nonahydrat (Firma Sigma Aldrich, Reinheit 99,6%) eingewogen und unter Rühren (Magnetrührer, 50mm Rührfisch, 150rpm) in so wenig VE Wasser (Leitfähigkeit nach lonentausch 0,5 mikro-Siemens) wie nötig (ca. 100mL) gelöst. Nach dem Lösen wurde die Mischung quantitativ in das Gilufoc 83 unter Rühren eingebracht. Das Becherglas wurde mit VE Wasser nachgespült.

Die Mischung wurde abdeckt und 2h bei 80°C gerührt (50mm Rührfisch, 150rpm). Danach wurde die Mischung in flache Abdampfschalen (Haldenwanger 888-6a / 160mm Durchmesser) überführt.

Die befüllten Schalen wurden in einen geeigneten Kammerofen (Nabertherm TH 120/12) gestellt und in einer ersten Kalzinierung die Nitratzersetzung unter synthetischer Luft (CDA) (6L/min) durchführt. Alle Haltepunkte wurden mit 1K/min angefahren und für eine Stunde gehalten (Haltepunkte 80°C, 150°C, 200°C, 250°C, 300°C, 350°C und 450°C). Nach Abschluss der letzten Haltezeit wurde auf Raumtemperatur abgekühlt (natürliche Abkühlung des Ofens).

Das oxydische Vorprodukt wurde nun aus den Abdampfschalen entfernt und auf die finale Korngröße (315-500µm) gebracht. Hierzu wurde die Probe mit einem Achatpistill erst durch ein 1000µm und anschließend durch ein 500µm Analysensieb (Firma Retsch) gedrückt. Die Feinanteile wurden nun durch händisches Sieben (ca. 10 Sekunden) mittels eines 315µm Analysensiebes von der Zielfraktion abgetrennt. Die Feinanteile wurden als Rückstellmuster zurückgestellt. Die Zielfraktion wurd erneut kalziniert um die Phasenbildung abzuschließen. Hierzu wurde die Probe in einen AlSint-Tiegel (unglasierte Al2O3 Tiegel von Haldenwanger) in einem Muffelofen (M110 von Heraeus) bei 900°C (Heizrampe 5K/min) für 4h unter CDA (2L/min) kalziniert. Nach Abkühlen der Probe auf Raumtemperatur wurden ggf. entstandene Feinanteile (<315µm) durch erneutes Sieben abgetrennt.

**Tabelle 1: Übersicht Einwaagen Probe 1-4**

| Nr | Zusammensetzung | Gilufloc 83 | Y(NO₃)₃x6H₂O | Fe(NO₃)₃ x9H₂O | Co(NO₃)₂ x6H₂O | Ni(NO₃)₂ x6H₂O |
|---|---|---|---|---|---|---|
| 1 | Y_{2.68}Fe_{0.32}Al₅O₁₂ | 55.976g | 53.306g | 6.679g | - | - |
| 2 | Y_{2.68}Co_{0.32}Al₅O₁₂ | 56.128g | 53.450g | - | 4.767g | - |
| 3 | Y_{2.68}Ni_{0.32}Al₅O₁₂ | 56.135g | 53.457g | - | - | 4.85g |
| 4 | Y₃Co_{0.32}Al_{4.68}O₁₂ | 50.804g | 57.860g | - | 4.601 g | - |

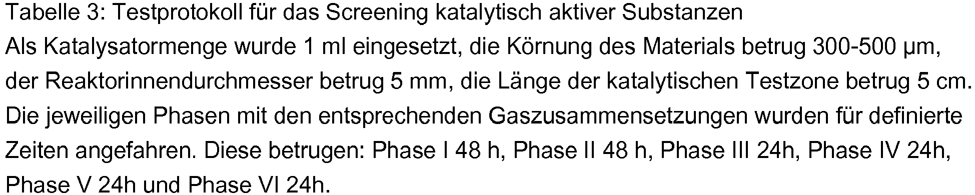

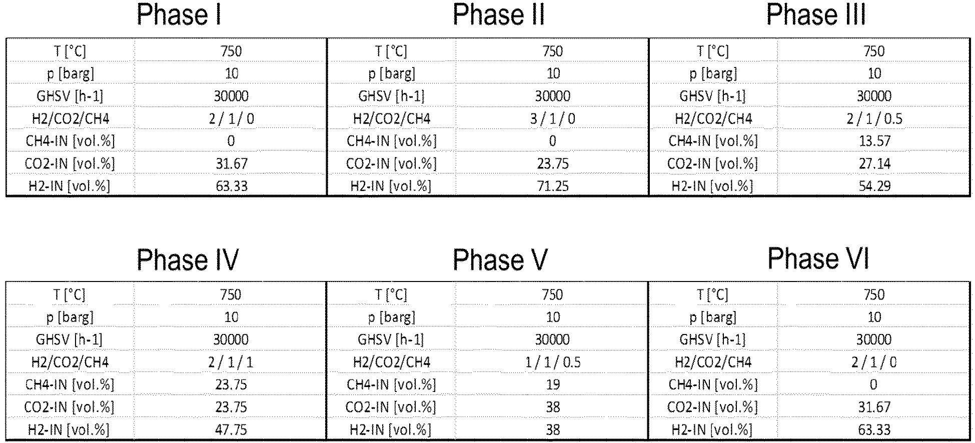

**Tabelle 3: Wasserstoffumsetzung-, Kohlenstoffdioxidumsetzung-, Methanausbeute- und Methanumsetzungdaten von Probe 1-4 im Vergleich zum kommerziellem Reforming-Katalysator G1-85 (BASF) in Phase I bis VI**

| | | Kommerzieller Katalysator G1-85 (BASF) | Probe 1 | Probe 2 | Probe 3 | Probe 4 |
|---|---|---|---|---|---|---|
| | | | Y_{2.68}Fe_{0.32}Al₅ O₁₂ | Y_{2.68}Co_{0.32}Al₅ O₁₂ | Y_{2.68}Ni_{0.32}Al₅ O₁₂ | Y₃Co_{0.32}Al_{4.68} O₁₂ |
| Phase I | Conv. H₂ [%] | 51.42404 | 29.04 | 38.75 | 52.03 | 50.51 |
| | Conv. CO₂ [%] | 58.3725 | 60.81 | 60.96 | 58.24 | 58.12 |
| | Yield CH₄ [%] | 16.83877 | 0.03 | 7.69 | 16.35 | 16.85 |
| Phase II | Conv. H₂ [%] | 48.70494 | 22.91 | 39.82 | 49.37 | 48.50 |
| | Conv. CO₂ [%] | 68.26528 | 69.58 | 68.96 | 67.84 | 68.03 |
| | Yield CH₄ [%] | 29.36827 | 0.05 | 19.19 | 28.74 | 29.14 |
| Phase III | Conv. H₂ [%] | 29.24043 | 29.97 | 32.54 | 30.45 | 30.79 |
| | Conv. CO₂ [%] | 63.47448 | 62.31 | 62.34 | 63.17 | 62.98 |
| | Conv. CH₄ [%] | -4.79178 | -4.08 | -6.80 | -4.13 | -6.57 |
| Phase IV | Conv. H₂ [%] | 0 | 29.83 | 23.79 | 16.80 | 17.20 |
| | Conv. CO₂ [%] | 0 | 62.67 | 63.93 | 66.47 | 66.05 |
| | Conv. CH₄ [%] | 0 | -1.96 | 2.07 | 7.75 | 6.08 |
| Phase V | Conv. H₂ [%] | 15.08326 | 43.80 | 33.13 | 14.91 | 14.56 |
| | Conv. CO₂ [%] | 45.62 | 47.23 | 50.08 | 55.54 | 54.78 |
| | Conv. CH₄ [%] | 0 | -1.51 | 7.67 | 23.91 | 21.12 |
| Phase VI | Conv. H₂ [%] | 0 | 32.20 | 46.20 | 52.46 | 50.86 |
| | Conv. CO₂ [%] | 0 | 61.25 | 59.65 | 58.23 | 58.31 |
| | Yield CH₄ [%] | 0 | 0.03 | 10.95 | 16.17 | 16.93 |

**Tabelle 4: Kohlenstoffgehalt in den Aktivmassen nach dem Screening katalytisch aktiver Substanzen**

| Probe | Kohlenstoffgehalt in Gew.-% in Bezug auf den eingesetzten Katalysator |
|---|---|
| G1-85 | 79.4 |
| Y_{2.68}Fe_{0.32}Al₅O₁₂ | 1.8 |
| Y_{2.68}Co_{0.32}Al₅O₁₂ | <0.1 |
| Y_{2.68}Ni_{0.32}Al₅O₁₂ | <0.1 |
| Y₃Co_{0.32}Al_{4.68}O₁₂ | <0.1 |

### Beispiel 2

Die Probe 5 wurde analog Beispiel 1 hergestellt. Die röntgendiffraktometrische Analyse der Probe ergab ein phasenreines Garnet-Material.

**Tabelle 5: Übersicht der Einwaagen für Probe 5.**

| Nr | Zusammensetzung | Gilufloc 83 | Y(NO₃)₃ x6H₂O | Fe(NO₃)₃ x9H₂O | Co(NO₃)₂ x6H₂O | Ni(NO₃)₂ x6H₂O | Cu(NO₃)₂ x2,5H₂O |
|---|---|---|---|---|---|---|---|
| 5 | Y_{2.68}Cu_{0.32}Al₅O₁₂ | 55.986g | 53.314g | - | - | - | 3.876g |

Die Splitgröße des zu testenden Materiales betrug 0.5-1 µm, das gesamt Katalysatorvolumen im Reaktor 10 ml, die Länger der Katalysatorzone 8.85cm, der Reaktor-Innendurchmesser 12mm. Das Testprogramm ist in Tabelle 6 dargestellt, es wurden 8 Phasen angefahren, die Länge der jeweiligen Testphasen I bis VIII betrug jeweils 24 Stunden pro Phase. Am Ende von Phase VIII wurde der Katalysator ausgebaut und der Kohlenstoffgehalt auf dem Katalysator bestimmt.

**Tabelle 6: Testprotokoll für das Screening katalytisch aktiver Substanzen. Für die jeweilige Phase sind die Reaktionsbedingungen angegeben.**

| Phase | T[°C] | H₂:CO₂:CH₄:H₂O | P [barg] | GHSV [h⁻¹] |
|---|---|---|---|---|
| I | 750 | 3,0:1,0:0:0 | 20 | 30000 |
| II | 850 | 3,0:1,0:0:0 | 20 | 30000 |
| III | 950 | 3,0:1,0:0:0 | 20 | 30000 |
| IV | 950 | 3,0:1,0:0:0 | 20 | 40000 |
| V | 950 | 2,0:1,0:0:0 | 20 | 40000 |
| VI | 950 | 2,64:1,0:0,42:0,85 | 20 | 40000 |
| VII | 950 | 3.0: 1,0:0,3:0 | 20 | 40000 |
| VIII | 950 | 3,0:1,0:0:0 | 20 | 40000 |

**Tabelle 7: Wasserstoffumsetzung-, Kohlenstoffdioxidumsetzung-, Methanausbeute- und Methanumsetzungdaten von Probe 5 Y_{2.68}Cu_{0.32}Al₅O₁₂ in Phase I bis VIII**

| | | Probe 5 Y_{2.68}Cu_{0.32}Al₅O₁₂ |
|---|---|---|
| Phase I | Conv. H₂ [%] | 28.25 |
| | Conv. CO₂ [%] | 69.96 |
| | Yield CH₄ [%] | 0.37 |
| Phase II | Conv. H₂ [%] | 29.91 |
| | Conv. CO₂ [%] | 75.37 |
| | Yield CH₄ [%] | 1.00 |
| Phase III | Conv. H₂ [%] | 28.82 |
| | Conv. CO₂ [%] | 74.90 |
| | Yield. CH₄ [%] | 1.72 |
| Phase IV | Conv. H₂ [%] | 31.65 |
| | Conv. CO₂ [%] | 78.56 |
| | Yield. CH₄ [%] | 2.91 |
| Phase V | Conv. H₂ [%] | 32.54 |
| | Conv. CO₂ [%] | 78.27 |
| | Yield. CH₄ [%] | 2.47 |
| Phase VI | Conv. H₂ [%] | 25.20 |
| | Conv. CO₂ [%] | 65.11 |
| | Conv. CH₄ [%] | 20.10 |
| Phase VII | Conv. H₂ [%] | 33.25 |
| | Conv. CO₂ [%] | 78.88 |
| | Conv. CH₄ [%] | 10.27 |
| Phase VIII | Conv. H₂ [%] | 36.86 |
| | Conv. CO₂ [%] | 78.34 |
| | Yield CH₄ [%] | 2.06 |

**Tabelle 8: Kohlenstoffgehalt in die Aktivmassen nach dem Screening katalytisch aktiver Substanzen**

| Probe 5 | Kohlenstoffgehalt in Gew.-% in Bezug auf den eingesetzten Katalysator |
|---|---|
| Y_{2.68}Cu_{0.32}Al₅O₁₂ | <0.1 |

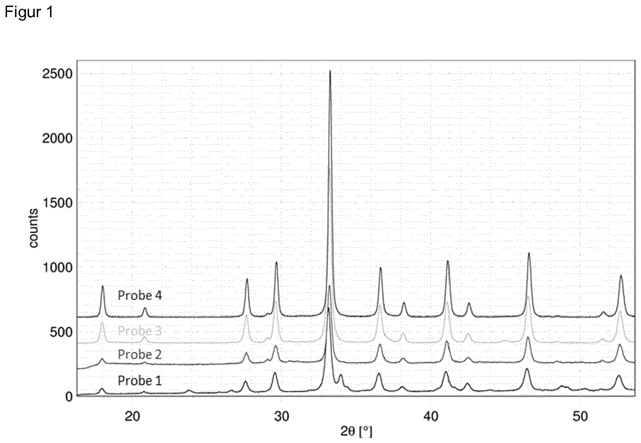

## Patentansprüche

1. Katalysatorvorläufer, **dadurch gekennzeichnet, dass** dieser zumindest ein kristallines Material umfasst, das Yttrium und Aluminium enthält, kennzeichnend für das kristalline Material ist, dass es eine kubische Garnetstruktur aufweist, wobei der Katalysatorvorläufer Cu, Zn, Fe, Co und/oder Ni enthält und wobei ein Teil der Yttrium- und/oder Aluminiumspezies im kristallinen Material durch zumindest eine Spezies aus der Gruppe Cu, Zn, Ni, Co, Fe substituiert sind, wobei der Anteil an Nebenphasen im Bereich von 0 - 49 Gew.-% liegt.

2. Katalysatorvorläufer nach Anspruch 1, **dadurch gekennzeichnet, dass** der Yttriumgehalt im Bereich von 15 - 80 mol-% und der Aluminiumgehalt im Bereich 10 - 90 mol-% liegt, wobei der Gesamtgehalt an Spezies aus der Gruppe Cu, Zn, Ni, Co, Fe im Bereich von 0,01 - 10 mol-% liegt.

3. Katalysatorvorläufer nach Anspruch 1 oder 2, **dadurch gekennzeichnet, dass** der Katalysator oder Katalysatorvorläufer zusätzlich zur Hauptphase, kubische Garnetstruktur auch zumindest eine Nebenphase umfasst, deren Anteil im Bereich 1 - 49 Gew.-% liegt.

4. Katalysatorvorläufer nach einem der Ansprüche 1 bis 3, **dadurch gekennzeichnet, dass** der Katalysator oder Katalysatorvorläufer eine BET-Oberflächen aufweist, die größer ist als 2 m²/g.

5. Katalysatorvorläufer nach einem der Ansprüche 1 bis 4, **dadurch gekennzeichnet, dass** dieser kubisches Yttriumaluminiumgarnet als Hauptphase enthält.

6. Katalysatorvorläufer nach einem der Ansprüche 1 bis 5, **dadurch gekennzeichnet, dass** dieser zumindest ein edelmetallhaltiger Promoter aus der Gruppte Pt, Rh, Ru, Pd, Ir, Au enthält, wobei der Gehalt an edelmetallhaltigem Promoter im Bereich von 0,001 bis 5 Gew.-% liegt.

7. Katalysatorvorläufer nach einem der Ansprüche 1 bis 6, **dadurch gekennzeichnet, dass** dieser zumindest eine Kationenspezies ausgewählt aus der Gruppe der Kationenspezies I, Ce, La, Pr, Tb, Nd, Eu, oder der Gruppe der Kationenspezies II, Mg, Ca, Sr, Ba, Ga, Be, Cr, Mn, umfasst.

8. Katalysatorvorläufer nach einem der Ansprüche 1 bis 7, **dadurch gekennzeichnet, dass** der Katalysatorvorläufer Nickel enthält und ein Teil der Yttrium- und/oder Aluminiumspezies im kristallinen Material durch Nickel substituiert ist.

9. Verfahren zur Herstellung eines Katalysatorvorläufer nach einem der Ansprüche 1 bis 8, **gekennzeichnet durch** die nachfolgend genannten Schritte:
(i) Bereitstellung einer Aluminiumquelle,
(ii) Inkontaktbringen der Aluminiumquelle, mit einer yttriumhaltigen Verbindung und zumindest einem weiteren Metallsalz der Gruppe Kupfer, Zink, Nickel, Kobalt oder Eisen,
(iii) Durchmischung der Aluminiumquelle (i), die in Kontakt mit der yttriumhaltigen Verbindung aus Schritt (ii) steht,
(iv) Trocknung des Gemisches,
(v) Tieftemperaturkalzinierung des Gemisches bei einer Temperatur kleiner gleich 550°C,
(vi) Abformung beziehungsweise Formgebung,
(vii) Hochtemperaturkalzinierung des Gemisches bei einer Temperatur größer gleich 750°C.

10. Verfahren nach Anspruch 9, **dadurch gekennzeichnet, dass** als Aluminiumquelle basische Lösungen oder Dispersionen mit Polyaluminiumchlorid und/oder ein nanopartikulärer aluminiumhaltigen Ausgangsstoff verwendet werden.

11. Verfahren nach Anspruch 9 oder 10, **dadurch gekennzeichnet, dass** die Metallsalze bei der Durchmischung in Schritt (iii) in Form einer Schmelze vorliegen.

12. Verfahren zur Kohlendioxidhydrierung und/oder Reformierung von Kohlenwasserstoffe unter Verwendung eines Katalysatorvorläufers gemäß einem der Ansprüche 1 bis 8, durch nachfolgende Schritte gekennzeichnet:
(a.1) Inkontaktbringen von einem Eduktgas, das bei einer Kohlendioxidhydrierung Wasserstoff und Kohlenstoffdioxid enthält und bei einer Reformierung Kohlenwasserstoffe und Kohlenstoffdioxid enthält, mit dem erfindungsgemäßen Katalysatorvorläufer,
(a.2) das Inkontaktbringen von Eduktgas mit dem im Reaktor befindlichen Katalysator erfolgt bei einer Temperatur > 600 °C,
(a.3) beim Inkontaktbringen und während der Durchführung des Prozesses ist der Prozessdruck im Reaktor > 1 bar,
(a.4) Beaufschlagung des Katalysators mit einem Gasstrom dessen GHSV in einem Bereich von 500 bis 100.000 hr⁻¹ liegt.

13. Verfahren zur Reformierung von Kohlenwasserstoffen nach Anspruch 12, **dadurch gekennzeichnet, dass** im Reformiergasstrom Methan und Kohlendioxid vorliegen, wobei das Verhältnis von Methan zu Kohlendioxid im Bereich von 4 zu 1 bis 1 zu 2 liegt.

## Claims

1. A catalyst precursor, wherein this comprises at least one crystalline material which comprises yttrium and aluminum and has the characteristic that it has a cubic garnet structure, where the catalyst precursor comprises Cu, Zn, Fe, Co and/or Ni and where part of the yttrium and/or aluminum species in the crystalline material are replaced by at least one species from the group consisting of Cu, Zn, Ni, Co, Fe, where the proportion of secondary phases is in the range from 0-49% by weight.

2. The catalyst precursor according to claim 1, wherein the yttrium content is in the range 15-80 mol% and the aluminum content is in the range 10-90 mol%, where the total content of species from the group consisting of Cu, Zn, Ni, Co, Fe is in the range 0.01-10 mol%.

3. The catalyst precursor according to claim 1 or 2, wherein the catalyst or catalyst precursor comprises, in addition to the main phase cubic garnet structure, at least one secondary phase present in a proportion in the range 1-49% by weight.

4. The catalyst precursor according to any of claims 1 to 3, wherein the catalyst or catalyst precursor has a BET surface area which is greater than 2 m²/g.

5. The catalyst precursor according to any of claims 1 to 4, wherein this comprises cubic yttrium aluminum garnet as main phase.

6. The catalyst precursor according to any of claims 1 to 5, wherein this comprises at least one noble metal-comprising promoter from the group consisting of Pt, Rh, Ru, Pd, Ir, Au, where the content of noble metal-comprising promoter is in the range from 0.001 to 5% by weight.

7. The catalyst precursor according to any of claims 1 to 6, wherein this comprises at least one cationic species selected from the group of cationic species I consisting of Ce, La, Pr, Tb, Nd, Eu, or the group of cationic species II consisting of Mg, Ca, Sr, Ba, Ga, Be, Cr, Mn.

8. The catalyst precursor according to any of claims 1 to 7, wherein the catalyst precursor comprises nickel and part of the yttrium and/or aluminum species in the crystalline material is replaced by nickel.

9. A process for producing a catalyst precursor according to any of claims 1 to 8, which comprises the following steps:
(i) provision of an aluminum source,
(ii) contacting of the aluminum source with an yttrium-comprising compound and at least one further metal salt of the group consisting of copper, zinc, nickel, cobalt or iron,
(iii) intimate mixing of the aluminum source from step (i) which is in contact with the yttrium-comprising compound from step (ii),
(iv) drying of the mixture,
(v) low-temperature calcination of the mixture at a temperature of less than or equal to 550°C,
(vi) forming or shaping,
(vii) high-temperature calcination of the mixture at a temperature of greater than or equal to 750°C.

10. The process according to claim 9, wherein basic solutions or dispersions comprising polyaluminum chloride and/or a nanoparticulate aluminum-comprising starting material are used as aluminum source.

11. The process according to claim 9 or 10, wherein the metal salts are present in the form of a melt during the mixing in step (iii).

12. A process for carbon dioxide hydrogenation and/or reforming of hydrocarbons using a catalyst precursor according to any of claims 1 to 8, which comprises the following steps:
(a.1) contacting of a feed gas which, if carbon dioxide hydrogenation takes place, comprises hydrogen and carbon dioxide and, if reforming takes place, comprises hydrocarbons and carbon dioxide with the catalyst precursor of the invention,
(a.2) the contacting of feed gas with the catalyst present in the reactor occurs at a temperature of ≥ 600°C,
(a.3) the process pressure in the reactor is > 1 bar during contacting and while the process is carried out,
(a.4) exposure of the catalyst to a gas stream whose GHSV is in the range from 500 to 100 000 hr⁻¹.

13. The process for the reforming of hydrocarbons according to claim 12, wherein methane and carbon dioxide are present in the reforming gas stream, with the ratio of methane to carbon dioxide being in the range from 4:1 to 1:2.

## Revendications

1. Précurseur de catalyseur, **caractérisé en ce que** celui-ci comprend au moins un matériau cristallin qui contient de l'yttrium et de l'aluminium, ledit matériau cristallin étant **caractérisé en ce qu'**il présente une structure grenat cubique, le précurseur de catalyseur contenant Cu, Zn, Fe, Co et/ou Ni, et une partie des espèces yttrium et/ou aluminium dans le matériau cristallin étant remplacées par au moins une espèce du groupe constitué par Cu, Zn, Ni, Co, Fe, la proportion de phases secondaires se situant dans la plage allant de 0 à 49 % en poids.

2. Précurseur de catalyseur selon la revendication 1, **caractérisé en ce que** la teneur en yttrium se situe dans la plage allant de 15 à 80 % en moles et la teneur en aluminium dans la plage allant de 10 à 90 % en moles, la teneur totale en espèces du groupe constitué par Cu, Zn, Ni, Co, Fe se situant dans la plage allant de 0,01 à 10 % en moles.

3. Précurseur de catalyseur selon la revendication 1 ou 2, **caractérisé en ce que** le catalyseur ou le précurseur de catalyseur comprend en plus de la phase principale, une structure grenat cubique, également au moins une phase secondaire, dont la proportion se situe dans la plage allant de 1 à 49 % en poids.

4. Précurseur de catalyseur selon l'une quelconque des revendications 1 à 3, **caractérisé en ce que** le catalyseur ou le précurseur de catalyseur présente une surface BET qui est supérieure à 2 m²/g.

5. Précurseur de catalyseur selon l'une quelconque des revendications 1 à 4, **caractérisé en ce que** celui-ci contient un grenat d'yttrium-aluminium cubique en tant que phase principale.

6. Précurseur de catalyseur selon l'une quelconque des revendications 1 à 5, **caractérisé en ce que** celui-ci contient au moins un promoteur contenant un métal noble du groupe constitué par Pt, Rh, Ru, Pd, Ir, Au, la teneur en promoteur contenant un métal noble se situant dans la plage allant de 0,001 à 5 % en poids.

7. Précurseur de catalyseur selon l'une quelconque des revendications 1 à 6, **caractérisé en ce que** celui-ci comprend au moins une espèce cationique choisie dans le groupe constitué par les espèces cationiques I, Ce, La, Pr, Tb, Nd, Eu, ou le groupe constitué par les espèces cationiques Il, Mg, Ca, Sr, Ba, Ga, Be, Cr, Mn.

8. Précurseur de catalyseur selon l'une quelconque des revendications 1 à 7, **caractérisé en ce que** le précurseur de catalyseur contient du nickel et une partie des espèces yttrium et/ou aluminium dans le matériau cristallin est remplacée par du nickel.

9. Procédé de fabrication d'un précurseur de catalyseur selon l'une quelconque des revendications 1 à 8, **caractérisé par** les étapes suivantes :
(i) la préparation d'une source d'aluminium,
(ii) la mise en contact de la source d'aluminium avec un composé contenant de l'yttrium et au moins un autre sel métallique du groupe constitué par le cuivre, le zinc, le nickel, le cobalt ou le fer,
(iii) le mélange de la source d'aluminium (i) qui est en contact avec le composé contenant de l'yttrium de l'étape (ii),
(iv) le séchage du mélange,
(v) la calcination à température basse du mélange à une température inférieure ou égale à 550 °C,
(vi) le moulage ou le façonnage,
(vii) la calcination à température élevée du mélange à une température supérieure ou égale à 750 °C.

10. Procédé selon la revendication 9, **caractérisé en ce que** des solutions ou dispersions basiques contenant du polychlorure d'aluminium et/ou un matériau de départ nanoparticulaire contenant de l'aluminium sont utilisés en tant que source d'aluminium.

11. Procédé selon la revendication 9 ou 10, **caractérisé en ce que** les sels métalliques se présentent sous la forme d'une masse fondue lors du mélange à l'étape (iii).

12. Procédé d'hydrogénation de dioxyde de carbone et/ou de reformage d'hydrocarbures utilisant un précurseur de catalyseur selon l'une quelconque des revendications 1 à 8, **caractérisé par** les étapes suivantes :
(a.1) la mise en contact d'un gaz réactif qui contient lors d'une hydrogénation de dioxyde de carbone de l'hydrogène et du dioxyde de carbone et lors d'un reformage des hydrocarbures et du dioxyde de carbone, avec le précurseur de catalyseur selon l'invention,
(a.2) la mise en contact du gaz réactif avec le catalyseur se trouvant dans le réacteur a lieu à une température ≥ 600 °C,
(a.3) lors de la mise en contact et pendant la réalisation du procédé, la pression de procédé dans le réacteur est ≥ 1 bar,
(a.4) le chargement du catalyseur avec un courant gazeux dont le GHSV se situe dans une plage allant de 500 à 100 000 h⁻¹.

13. Procédé de reformage d'hydrocarbures selon la revendication 12, **caractérisé en ce que** du méthane et du dioxyde de carbone sont présents dans le courant gazeux de reformage, le rapport entre le méthane et le dioxyde de carbone se situant dans la plage allant de 4 sur 1 à 1 sur 2.
